(19) Europäisches Patentamt / European Patent Office / Office européen des brevets

(11) **EP 3 222 974 A1**

(12) **EUROPEAN PATENT APPLICATION**
published in accordance with Art. 153(4) EPC

(43) Date of publication:
27.09.2017 Bulletin 2017/39

(51) Int Cl.:
*G01C 21/34* (2006.01)     *G08G 1/00* (2006.01)
*G08G 1/0968* (2006.01)     *G08G 1/14* (2006.01)

(21) Application number: 15861383.6

(22) Date of filing: 13.11.2015

(86) International application number:
PCT/JP2015/005676

(87) International publication number:
WO 2016/079966 (26.05.2016 Gazette 2016/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.11.2014 JP 2014233540

(71) Applicant: NEC Corporation
Tokyo 108-8001 (JP)

(72) Inventors:
• WAKAYAMA, Hisaya
  Minato-ku, Tokyo 108-8001 (JP)
• OGAWA, Masatsugu
  Minato-ku, Tokyo 108-8001 (JP)

(74) Representative: Vossius & Partner
Patentanwälte Rechtsanwälte mbB
Siebertstrasse 3
81675 München (DE)

(54) **NAVIGATION DEVICE, NAVIGATION METHOD AND STORAGE MEDIUM**

(57)    [Problem] To determine a moving route as appropriate by selecting from a plurality of service providing sites in view of circumstances in which it is or is not allowed to wait.

[Solution] A current position obtaining unit 101 obtains the current position of a vehicle 1. A first location candidate obtaining unit 102 obtains a first location. A second location candidate obtaining unit 103 obtains a second location (e.g., an on-street parking lot). A state information obtaining unit 104 obtains, as state information, first location state information and second location state information. The first location state information is information regarding the state of provision of a vehicle parking service at the first location. The second location state information is information regarding the state of provision of a vehicle parking service at the second location. A route setting unit 105 sets a moving route for the vehicle 1 on the basis of the state information obtained by the state information obtaining unit 104.

Fig. 1

**Description**

[Technical Field]

The present invention relates to a navigation device and the like, and more particularly, a device and the like for setting a moving route for a vehicle.

[Background Art]

A navigation system, which is a system for searching for routes to a destination, has been widely used both in Japan and overseas recently. As well as for vehicles, navigation systems for bicycles and pedestrians have become widespread.
Some of the recent known navigation systems have a neighborhood search function. The neighborhood search function can be used to search for, and suggest to a user, candidate destinations in the vicinity of the user, who need only specify a destination category, not an exact destination.
A navigation system having the neighborhood search function allows the user to specify a destination category, such as "convenience store".
When the user specifies "convenience store" as a destination category, the navigation system obtains the user's current position using the Global Positioning System (GPS) or the like, searches for convenience stores in the vicinity of the current position, and presents the stores to the user. The user then determines a more specific destination using the presented information about convenience stores. Hence, to use a specific service (which corresponds to an information service about nearby convenience stores in the above example), the user can search for a destination without knowing exact information, such as addresses or store names, about the stores providing the service. As a result, the user can receive such specific service.
In some cases, however, the user may not be able to receive such specific service immediately upon arrival at the destination where the service is provided. For example, in the case where the specific service is related to a parking lot, the user cannot receive the specific service, "parking a vehicle", if the parking lot is full. In such cases, the user cannot use the specific service, "parking a vehicle", until any of the vehicles parked in the parking lot comes out.
In connection with such cases, navigation systems involving consideration for availability of specific services are described in PTL 1 and PTL 2, for example. According to the techniques described in PTL 1 and PTL 2, the user can receive a specific service immediately upon arrival at a parking lot without being forced to wait.
As a technique for route search devices, PTL 1 discloses a technique to receive, when a plurality of parking lots near the destination are found, information pieces about the individual parking lots and to select a candidate route taking into consideration the received information pieces about the parking lots.
As a technique for distribution systems, PTL 2 discloses a technique to distribute parking lot information, including whether a parking lot is full or not, from a distribution server to vehicle-mounted devices.
The techniques described in PTL 1 and PTL 2, however, fail to deal with momentary changes in parking lot information. In the example of parking lots, it is a well-known fact that a once available parking lot may become full, or conversely a once full parking lot may become available, while the user is moving toward the destination. Thus, reflecting changes in the circumstances over time in navigation guidance would achieve more accurate guidance.
PTL 3 and PTL 4 each disclose an example of techniques that may be able to solve the problem.
PTL 3 discloses, as a system and method for routing to a charging station, a technique for providing a battery electric vehicle with a route to a charging station having available chargers compatible with the vehicle. With the technique, a charging station is selected by using information for decision-making, namely whether the charging station is expected to be available when the battery electric vehicle arrives there, on the basis of the current state of usage and of the length of time for which a battery electric vehicle currently using a charger has been using the charger.
As a technique for vehicle rental management systems, PTL 4 discloses a technique relating to a vehicle rental service that allows a user to drop off a vehicle at any return site. According to PTL 4, the user's destination and expected arrival time are obtained via a network and the vehicle reservation is made on the basis of the obtained information.

[Citation List]

[Patent Literature]

[PTL 1] Japanese Unexamined Patent Application Publication No. 2007-263581
[PTL 2] Japanese Unexamined Patent Application Publication No. 2009-174864

[PTL 3] Japanese Unexamined Patent Application Publication (Translation of PCT Application) No. 2014-500697
[PTL 4] WO 2014/030233

[Summary of Invention]

[Technical Problem]

Sites in which a "vehicle parking" service is provided may include not only parking lots but also parking areas that make use of on-street spaces, such as coin-operated parking spaces (hereinafter called an "on-street parking area").

Unlike general parking lots, an on-street parking area, when full, does not allow vehicles to wait as a rule. Thus, when an on-street parking area is full, the user cannot wait but has to leave the area. Accordingly, if the search destination is an on-street parking area, the user is forced to consider moving to another site in case the area is full, which, as a result, causes inconvenience to the user. On the other hand, the user arriving at the right time can park his/her car without waiting.

That is, a moving route can be determined as appropriate by selecting from a plurality of service providing sites, through selective use of parking lots or on-street parking areas in view of the circumstance in which the vehicle is or is not allowed to wait. This enables the user to receive a more efficient "vehicle parking" service. In other words, it is suitable for the user to keep traveling around parking lots and on-street parking areas if the user should wait for an available on-street parking area, or to move to a parking lot if the user should wait for an available parking lot.

The techniques described in PTL 1 to PTL 4, however, are problematic in that they fail to determine the destination as appropriate in view of the circumstances in which the vehicle is or is not allowed to wait.

The technique described in PTL 3 does not take into consideration whether the user is allowed to wait at a charging station. The technique described in PTL 4 deals with rental vehicle services based on reservation. Thus, the technique described in PTL 4 cannot be applied to many of the cases where reservation is not acceptable (e.g., a parking lot).

The present invention has been designed in view of such circumstances, and an object of the invention is to provide a navigation device, a navigation method, and a navigation program, which are capable of determining, as appropriate, a moving route by selecting from a plurality of service providing sites in view of the circumstances in which the vehicle is or is not allowed to wait.

[Solution to Problem]

A navigation device according to the present invention includes: current position obtaining means that obtains the current position of a vehicle; first location candidate obtaining means that obtains a first location, which is a candidate location for a site where a predetermined service can be received and where the vehicle is allowed to wait when the predetermined service is not provided immediately upon arrival at the site; second location candidate obtaining means that obtains a second location, which is a candidate location for a site where the predetermined service can be received and where the vehicle is not allowed to wait when the predetermined service is not provided immediately upon arrival at the site; state information obtaining means that obtains, as state information, first location state information, which is information regarding the state of provision of the predetermined service at the first location obtained by the first location candidate obtaining means, and second location state information, which is information regarding the state of provision of the predetermined service at the second location obtained by the second location candidate obtaining means; and route setting means that sets a moving route for the vehicle on the basis of the state information obtained by the state information obtaining means.

A navigation method according to the present invention includes: obtaining a first location, which is a candidate location for a site where a predetermined service can be received and where the vehicle is allowed to wait when the predetermined service is not provided immediately upon arrival at the site, and a second location, which is a candidate location for a site where the predetermined service can be received and where the vehicle is not allowed to wait when the predetermined service is not provided immediately upon arrival at the site; obtaining, as state information, first location state information, which is information regarding the state of provision of the predetermined service at the first location, and second location state information, which is information regarding the state of provision of the predetermined service at the second location; and setting a moving route for the vehicle on the basis of the state information.

A storage medium according to the present invention stores a program that causes a computer to execute the processes of: obtaining a first location, which is a candidate location for a site where a predetermined service can be received and where the vehicle is allowed to wait when the predetermined service is not provided immediately upon arrival at the site, and a second location, which is a candidate location for a site where the predetermined service can be received and where the vehicle is not allowed to wait when the predetermined service is not provided immediately upon arrival at the site; obtaining, as state information, first location state information, which is information regarding the state of provision of the predetermined service at the first location, and second location state information, which is information regarding the state of provision of the predetermined service at the second location obtained by the second location candidate obtaining process; and setting a moving route for the vehicle on the basis of the state information.

[Advantageous Effects of Invention]

The navigation device and the like according to the present invention can determine as appropriate a moving route by selecting from a plurality of service providing sites in view of the circumstances in which the vehicle is or is not allowed to wait.

[Brief Description of Drawings]

Fig. 1 is a block diagram illustrating a configuration of a navigation device according to a first exemplary embodiment of the present invention.
Fig. 2 is a schematic diagram illustrating an example environment in which the navigation device according to the first exemplary embodiment of the present invention is used.
Fig. 3 is a flow diagram illustrating operations of the navigation device according to the first exemplary embodiment of the present invention.
Fig. 4 illustrates an example of state information obtained by the navigation device according to the first exemplary embodiment of the present invention.
Fig. 5 is a schematic diagram illustrating an example of a moving route generated by the navigation device according to the first exemplary embodiment of the present invention.
Fig. 6 illustrates an example of an update to the state information obtained by the navigation device according to the first exemplary embodiment of the present invention.
Fig. 7 is a diagram illustrating an example of a moving route regenerated by the navigation device according to the first exemplary embodiment of the present invention.
Fig. 8 is a block diagram illustrating a configuration of a navigation device according to a second exemplary embodiment of the present invention.
Fig. 9 is a schematic diagram illustrating an example environment in which the navigation device according to the second exemplary embodiment of the present invention is used.
Fig. 10 is a flow diagram illustrating operations of the navigation device according to the second exemplary embodiment of the present invention.
Fig. 11 illustrates an example of state information obtained by the navigation device according to the second exemplary embodiment of the present invention.
Fig. 12 is a block diagram illustrating a configuration of a navigation system according to a third exemplary embodiment of the present invention.
Fig. 13 is a schematic diagram illustrating an example environment in which the navigation device according to the third exemplary embodiment of the present invention is used.
Fig. 14 illustrates an example of state information obtained by the navigation device according to the third exemplary embodiment of the present invention.

[Description of Embodiments]

(First Exemplary Embodiment)

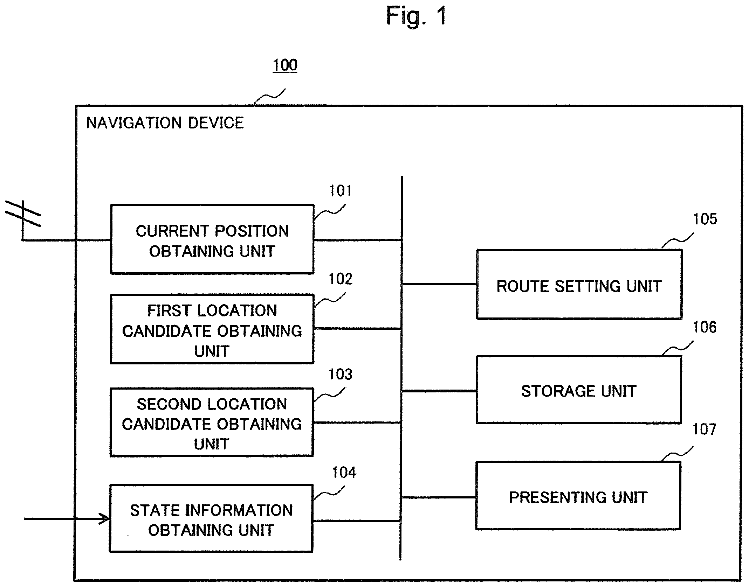

A navigation device 100 according to a first exemplary embodiment of the present invention will now be described with respect to its configuration. Fig. 1 is a block diagram illustrating a configuration of the navigation device 100. The orientation indicated by an arrow in the figure represents an example only, and it does not limit the direction of a signal between blocks.
The navigation device 100 is mounted on, for example, a vehicle (not illustrated). As illustrated in Fig. 1, the navigation device 100 includes a current position obtaining unit 101, a first location candidate obtaining unit 102, a second location candidate obtaining unit 103, a state information obtaining unit 104, a route setting unit 105, a storage unit 106, and a presenting unit 107.
The current position obtaining unit 101, the first location candidate obtaining unit 102, the second location candidate obtaining unit 103, the state information obtaining unit 104, the route setting unit 105, the storage unit 106, and the presenting unit 107 are connected to a single hub. Note that the storage unit 106 and the presenting unit 107 are not necessarily required for the present invention. For example, the storage unit 106 and the presenting unit 107 may be disposed on a device separate from the navigation device 100. In this case, the navigation device 100 and the device on which the storage unit 106 and the presenting unit 107 are disposed are connected to each other via, for example, a network. Thus, the storage unit 106 and the presenting unit 107 may be omitted in the present invention.

The current position obtaining unit 101 obtains the current position of the vehicle on which the navigation device 100 is mounted. More preferably, the current position obtaining unit 101 obtains the current position of the vehicle periodically. The current position obtaining unit 101 is configured with GPS, for example.

The first location candidate obtaining unit 102 obtains a first location. The first location refers to a candidate location for a site where a predetermined service can be received and where a vehicle is allowed to wait when the predetermined service is not provided immediately upon arrival at the site. By way of example, it is assumed here that the predetermined service is a vehicle parking service. Then, the first location refers to a candidate location for a parking lot where a vehicle parking service can be received and where a vehicle is allowed to wait when the vehicle parking service is not provided upon arrival at the site. The number of first locations obtained by the first location candidate obtaining unit 102 is not limited to one but may be two or more.

The second location candidate obtaining unit 103 obtains a second location. The second location refers to a candidate location for a site where a predetermined service can be received and where a vehicle 1 is not allowed to wait when the predetermined service is not provided immediately upon arrival at the site. By way of example, it is again assumed here that the predetermined service is a vehicle parking service. Then, the second location refers to a candidate location for an on-street parking lot (which may be called an on-street parking area) where a vehicle parking service can be received and where a vehicle is not allowed to wait when the vehicle parking service is not provided upon arrival at the site. The number of second locations obtained by the second location candidate obtaining unit 103 is not limited to one but may be two or more.

The state information obtaining unit 104 obtains first location state information and second location state information, collectively as state information, via a network, for example.

The first location state information refers to information about the state of provision of a vehicle parking service at the first location obtained by the first location candidate obtaining unit 102. The second location state information refers to information about the state of provision of a vehicle parking service at the second location obtained by the second location candidate obtaining unit 103.

The state information obtaining unit 104 is equipped with a communication means, such as 3G (third generation), Long-Term Evolution (LTE), wireless LAN (local area network), GSM® (Global System for Mobile Communications), or Dedicated Short-Range Communications (DSRC). This enables the state information obtaining unit 104 to obtain the first location state information and the second location state information described below, as state information. The state information includes the first location state information and the second location state information.

As the first location state information, the state information obtaining unit 104 can obtain, for example, a time interval between vehicle entries into, or departures from, the first location and the time when a vehicle enters or leaves the first location. As the first location state information, the state information obtaining unit 104 can also obtain, for example, the day of a week when a vehicle enters or leaves the first location, the degree of congestion on a street near the first location, and the number of vehicles waiting at the first location. The time interval between vehicle entries into the first location means an average time from entry of a vehicle into the first location to entry of the following vehicle into the first location. The time interval between departures from the first location means an average time from departure of a vehicle from the first location to departure of the following vehicle from the first location. The time interval between vehicle entries into, or departures from, the first location is calculated as an average value based on entry times and departure times covering all the vehicles entering or leaving the first location within a predetermined time period.

As the second location state information, the state information obtaining unit 104 can obtain, for example, a time interval between vehicle entries into, or departures from, the second location and the time when a vehicle enters or leaves the second location. As the second location state information, the state information obtaining unit 104 can also obtain, for example, the day of a week when a vehicle enters or leaves the second location and the degree of congestion on a street near the second location. The time interval between vehicle entries into the second location means a time period from entry of a vehicle into the second location to entry of the following vehicle into the second location. The time interval between departures from the second location means a time period from departure of a vehicle from the second location to departure of the following vehicle from the second location. The time interval between vehicle entries into, or departures from, the second location is calculated as an average value based on entry times and departure times covering all the vehicles entering or leaving the second location within a predetermined time period.

The route setting unit 105 sets a moving route for a vehicle on the basis of the state information obtained by the state information obtaining unit 104. More specifically, the route setting unit 105 sets a moving route for a vehicle so that the vehicle will pass by the first location and pass through the second location, on the basis of the state information obtained by the state information obtaining unit 104.

The storage unit 106 temporarily or permanently holds the information necessary for performing processes in the navigation device 100. The storage unit 106 may be composed of, for example, a hard disk drive (HDD) or a solid state drive (SSD). Alternatively, the storage unit 106 may be composed of, for example, flash memory such as a Secure Digital (SD) memory card. Alternatively, the storage unit 106 may be composed of, for example, a digital versatile disk (DVD) or dynamic random access memory (DRAM). Furthermore, the storage unit 106 may be composed of any combination of the above-listed items.

The presenting unit 107 presents a vehicle moving route to the user of the navigation device 100 in accordance with the setting made by the route setting unit 105. For the presenting unit 107, in addition to an image processing engine and a liquid crystal display, a sound processing engine and a speaker, for example, may be used.

A configuration of the navigation device 100 has been described above.

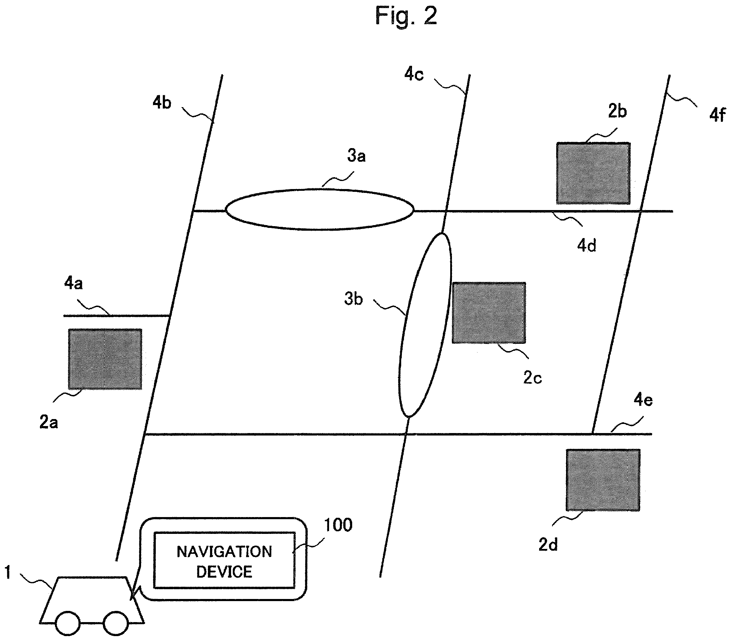

Fig. 2 is a schematic diagram illustrating an example environment in which the navigation device 100 is used. As illustrated in Fig. 2, a plurality of streets 4a, 4b, 4c, 4d, 4e, and 4f are provided. In addition, a plurality of parking lots 2a, 2b, 2c, and 2d are provided in the vicinity of any one of the streets 4a to 4f. On-street parking lots 3a and 3b are provided along any one of the streets 4a to 4f. The navigation device 100 is mounted on a vehicle 1, as illustrated in Fig. 2.

The plurality of parking lots 2a, 2b, 2c, and 2d correspond to the aforementioned first location. The on-street parking lots 3a and 3b correspond to the aforementioned second location.

The streets 4a, 4b, 4c, 4d, 4e, and 4f are hereinafter collectively called a street 4 unless it is necessary to distinguish among them. Likewise, the parking lots 2a, 2b, 2c, and 2d are hereinafter collectively called a parking lot 2 unless it is necessary to distinguish among them. The on-street parking lots 3a and 3b are hereinafter collectively called an on-street parking lot 3 unless it is necessary to distinguish among them.

The following describes operations of the navigation device 100.

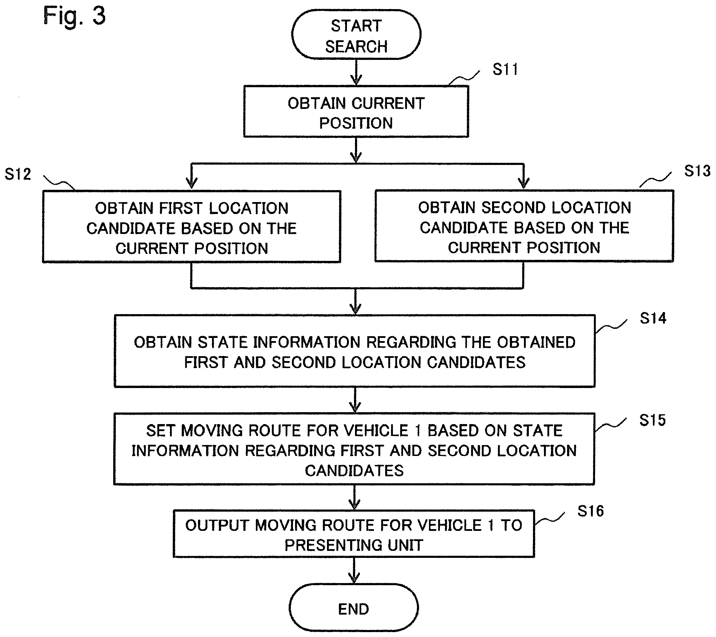

Fig. 3 is a flow diagram illustrating operations of the navigation device 100. The following example assumes that a route search is conducted with the navigation device 100 so that a vehicle parking service can be quickly provided.

As indicated in Fig. 3, upon starting a route search, the navigation device 100 first obtains the current position of the vehicle 1 (Step S11). A specific example of obtaining the current position may be obtaining the latest information by the navigation device 100 through the use of the current position obtaining unit 101. That is, the current position obtaining unit 101 obtains the current position of the vehicle 1. Alternatively, if the storage unit 106 holds positional information that is recent enough, the current position obtaining unit 101 may take such positional information.

Next, the first location candidate obtaining unit 102 or the second location candidate obtaining unit 103 obtains a candidate for the first or second location on the basis of the obtained current position (Step S12, Step S13). The first location candidate is obtained by the first location candidate obtaining unit 102. The second location candidate is obtained by the second location candidate obtaining unit 103. A specific example of a method for obtaining a candidate may be automatically extracting a candidate closest to the current position of the vehicle 1 from all the candidates for the first or second location.

Next, the navigation device 100 obtains the state information regarding each of the obtained first and second location candidates (Step S14). A specific example of obtaining the state information may be obtaining the latest information by the navigation device 100 through the use of the state information obtaining unit 104. That is, the state information obtaining unit 104 obtains the first location state information and the second location state information. Alternatively, if the storage unit 106 holds state information that is recent enough, the state information obtaining unit 104 may take such state information from the storage unit 106.

The route setting unit 105 sets a moving route for the vehicle 1 on the basis of the state information regarding the first and second locations (Step S 15). Specifically, the route setting unit 105 sets a moving route for the vehicle 1 on the basis of, for example, the state information (the first location state information and the second location state information) obtained by the state information obtaining unit 104. More specifically, the route setting unit 105 sets a moving route for the vehicle 1 so that the vehicle 1 will pass by the first location and pass through the second location, on the basis of the state information obtained by the state information obtaining unit 104.

Finally, the route setting unit 105 outputs the determined moving route for the vehicle 1 to the presenting unit 107 (Step S16) and exits the search process. The presenting unit 107 presents the moving route for the vehicle 1 that has been set by the route setting unit 105 to the user of the navigation device 100, by means of screen display, voice production, or the like. Thus, the user of the navigation device 100 can recognize the moving route for the vehicle 1.

Operations of the navigation device 100 have been described above.

The following describes a specific example of the operations of the navigation device 100 in more detail referring to the drawings.

The following example assumes that a vehicle 1, parking lots 2, on-street parking lots 3, and streets 4 are located as illustrated in Fig. 2 and that a search for a nearby parking lot or on-street parking lot is conducted with the navigation device 100.

When the navigation device 100 starts the search process, the current position obtaining unit 101 obtains the current position of the vehicle 1 as described above. Then, the first location candidate obtaining unit 102 obtains nearby parking lots 2a, 2b, 2c, and 2d as the first locations. The second location candidate obtaining unit 103 obtains on-street parking lots 3a and 3b as the second locations. Note that the first location candidate obtaining unit 102 and the second location candidate obtaining unit 103 obtain the first locations and the second locations, respectively, which are present within a predetermined distance from the current position of the vehicle 1. The state information obtaining unit 104 then obtains, as state information, first location state information and second location state information via a network, for example.

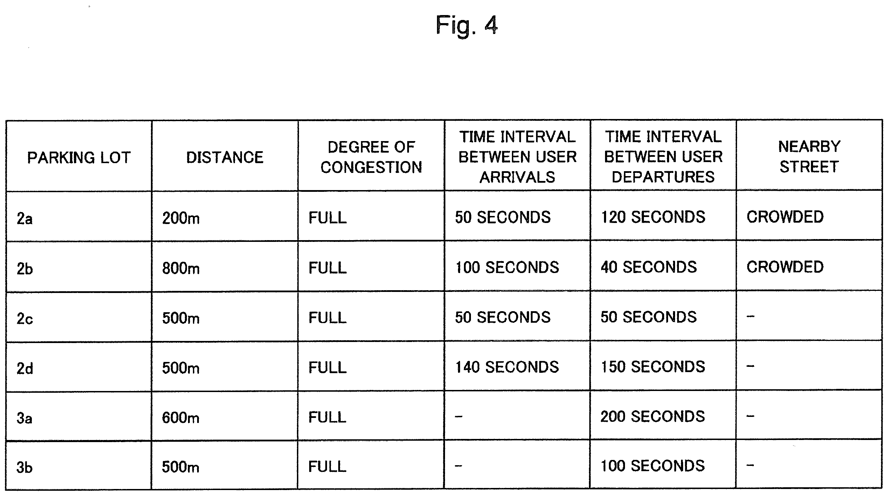

Fig. 4 illustrates an example of the state information obtained by the navigation device 100.

The example in Fig. 4 assumes that the first location candidate obtaining unit 102 and the second location candidate obtaining unit 103 obtain a first location and a second location, respectively, which are present within a radius of 1,200 m in a predetermined direction from the current position of the vehicle 1. Accordingly, the state information obtaining unit 104 obtains state information regarding the first locations (parking lots 2a, 2b, 2c, and 2d) and the second locations (on-street parking lots 3a and 3b) that are located within a radius of 1,200 m from the current position of the vehicle 1 in its traveling direction (the upward direction on the page of Fig. 2).

The state information obtaining unit 104 obtains the first location state information, which may include distances to the parking lots 2a, 2b, 2c, and 2d, degrees of congestion in the parking lots 2a, 2b, 2c, and 2d, and time intervals between user arrivals. The first location state information obtained by the state information obtaining unit 104 may further include time intervals between vehicle departures from the parking lots 2a, 2b, 2c, and 2d and degrees of congestion on streets near the parking lots 2a, 2b, 2c, and 2d. The aforementioned items of the first location state information are examples only, and thus other items may be used.

Likewise, the state information obtaining unit 104 obtains the second location state information, which may include distances to the on-street parking lots 3a and 3b, degrees of congestion in the on-street parking lots 3a and 3b, time intervals between user arrivals, time intervals between vehicle departures from the on-street parking lots 3a and 3b, and degrees of congestion on streets near the on-street parking lots 3a and 3b. The aforementioned items of the second location state information are examples only, and thus other items may be used.

Next, the route setting unit 105 in the navigation device 100 generates a moving route for the vehicle 1 on the basis of the state information (the first location state information and the second location state information) illustratively shown in Fig. 4.

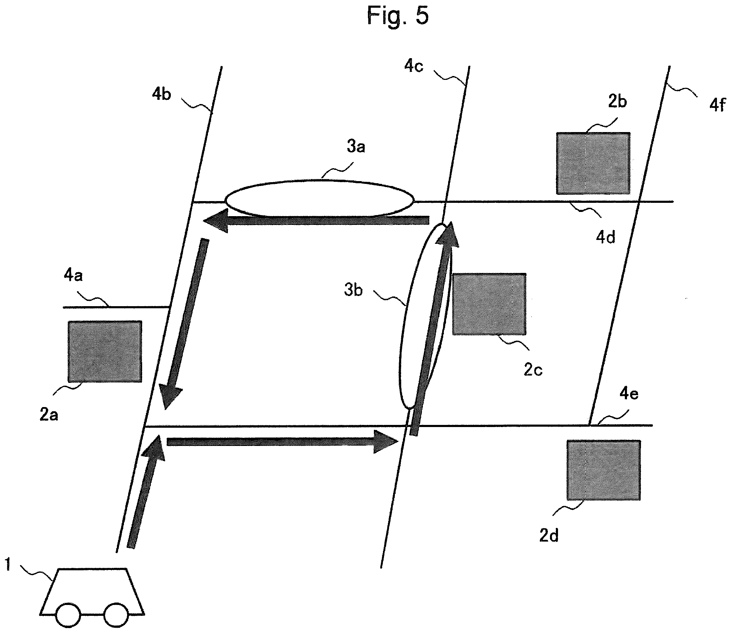

Fig. 5 is a schematic diagram illustrating an example of a moving route generated by the navigation device 100.

First, on the basis of the state information, the route setting unit 105 extracts a candidate for a parking lot or an on-street parking lot that may be set on a moving route, from the first and second locations.

For example, the route setting unit 105 extracts a parking lot or on-street parking lot that satisfies any one of the conditions (A), (B), and (C) below, as a candidate for a parking lot or an on-street parking lot that may be set on a moving route:

(A) A parking lot or an on-street parking lot whose nearby streets are not crowded and whose "degree of congestion" is "available";
(B) A parking lot whose nearby streets are not crowded, whose "degree of congestion" is "full", and whose time interval between user departures is equal to or less than the time interval between user arrivals; or
(C) An on-street parking lot whose nearby streets are not crowded, whose "degree of congestion" is "full", and whose time interval between user departures is equal to or less than 300 seconds.

The route setting unit 105 checks if the first and second locations include any parking lot or on-street parking lot that satisfies the condition (A). As seen in Fig. 4, the parking lot 2c, the parking lot 2d, the on-street parking lot 3a, and the on-street parking lot 3b are the parking lots or on-street parking lots having uncrowded nearby streets. However, there is no parking lot or on-street parking lot whose "degree of congestion" is "available". Thus, the route setting unit 105 determines that no parking lot or on-street parking lot satisfying the condition (A) is included in the first and second locations.

The route setting unit 105 checks if the first and second locations include any parking lot that satisfies the condition (B). As seen in Fig. 4, the parking lot 2c and the parking lot 2d are the parking lots having uncrowded nearby streets. In addition, the parking lots 2b and 2c are the parking lots whose "degree of congestion" is "full" and whose time interval between user departures is equal to or less than the time interval between user arrivals. Thus, the route setting unit 105 determines that the parking lot 2c, which satisfies the condition (B), is included in the first and second locations.

The route setting unit 105 checks if the first and second locations include any on-street parking lot that satisfies the condition (C). As seen in Fig. 4, the on-street parking lots 3a and 3b are the parking lots having uncrowded nearby streets. In addition, the on-street parking lots 3a and 3b are the on-street parking lots whose "degree of congestion" is "full" and whose time interval between user departures is equal to or less than 300 seconds. Thus, the route setting unit 105 determines that the on-street parking lots 3a and 3b, which satisfy the condition (C), are included in the first and second locations.

Consequently, as candidates for the parking lot or on-street parking lot that can be set on a moving route, the route setting unit 105 extracts the parking lot 2c and the on-street parking lots 3a and 3b from the first and second locations.

Next, the route setting unit 105 sets a route so that the vehicle will pass through at least one of the candidates for the parking lot and on-street parking lot that can be set on a moving route. In the example above, the route setting unit 105 sets a moving route so that the vehicle will pass through at least one of the parking lot 2c and on-street parking lots 3a and 3b that have been extracted.

For this purpose, the route setting unit 105 sets a moving route so that the vehicle will pass through with priority a parking lot or on-street parking lot that satisfies the condition (A). At the same time, the route setting unit 105 sets a moving route so that the vehicle will pass through at least one of the extracted parking lots or on-street parking lots over a shorter distance. Preferably, the route setting unit 105 sets a moving route so that the vehicle will repeatedly cruise at least one of the extracted parking lots or on-street parking lots over a shorter distance.

Specifically, the route setting unit 105 sets a moving route using heuristics such as simulated annealing or a genetic algorithm. At this time, the route setting unit 105 sets a moving route by regarding the determination of a route over a shorter distance as the traveling salesperson problem or the Hamiltonian path problem, with the constrained condition that an extracted parking lot or on-street parking lot has to be passed through.

As described above, there is no parking lot or on-screen parking lot that satisfies the condition (A). As illustrated in Fig. 5, the parking lot 2c satisfying the condition (B) is provided near the street 4c. The on-street parking lot 3b, which satisfies the condition (C), is provided along the street 4c. The on-street parking lot 3a, which satisfies the condition (C), is provided along the street 4d. Accordingly, the route setting unit 105 sets a route that goes through the streets 4c and 4d. As illustrated in Fig. 5, the streets 4e, 4c, 4d, and 4b form a circular street over the shortest distance. Accordingly, the route setting unit 105 sets a moving route that goes through the extracted parking lot 2c, on-street parking lot 3a, and on-street parking lot 3b sequentially as indicated by arrows in Fig. 5.

After that, the vehicle 1 travels along the moving route that has been set by the route setting unit 105. When, for example, the on-street parking lot 3b is made available while the vehicle 1 is traveling, the user of the navigation device 100 can achieve the original intention (i.e., to park the vehicle 1) by parking the vehicle 1 in the on-street parking lot 3b.

If the on-street parking lot 3b is not made available, the user of the navigation device 100 can obtain the updated state information before traveling the moving route again, by conducting a search for a moving route for the vehicle 1 with the navigation device 100 again.

When a search for a moving route for the vehicle 1 is conducted again while the vehicle 1 is traveling along the moving route that has been set by the route setting unit 105, the route setting unit 105 re-sets a moving route using the state information regarding the first and second locations that have already been obtained by the first and second location candidate obtaining units 102 and 103.

Alternatively, when a search for a moving route for the vehicle 1 is conducted again while the vehicle 1 is traveling along the moving route that has been set by the route setting unit 105, the current position obtaining unit 101 may newly obtain the current position of the vehicle 1 and then the first and second location candidate obtaining units 102 and 103 may obtain the first and second locations again.

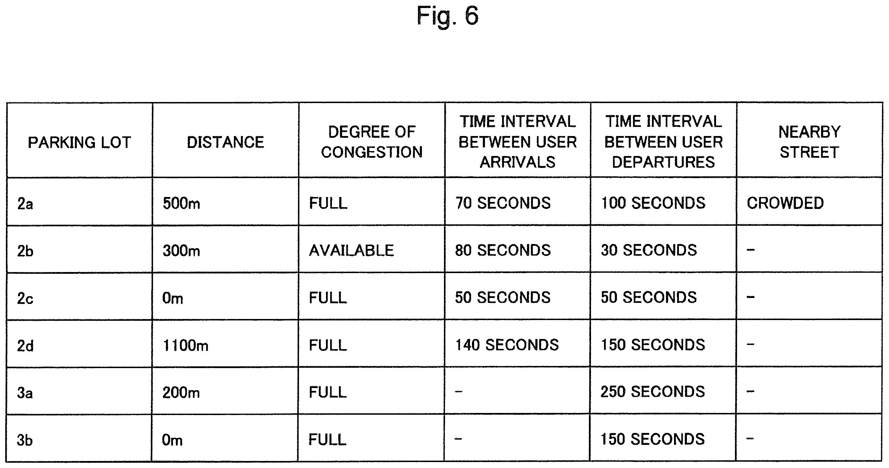

Fig. 6 illustrates an example of an update to the state information obtained by the navigation device 100.

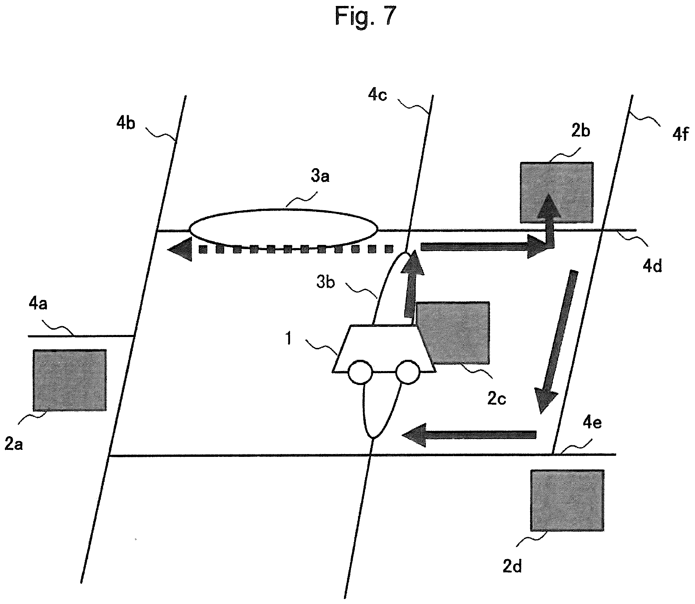

Fig. 7 illustrates an example of a moving route regenerated by the navigation device 100. The example in Fig. 6 assumes that the route setting unit 105 sets a moving route using the state information regarding the first and second locations that have already been obtained by the first and second location candidate obtaining units 102 and 103. By way of example, it is also assumed here that the user of the navigation device 100 has re-searched for a moving route for the vehicle 1 with the navigation device 100 while the vehicle 1 is running along the street 4c in the vicinity of the parking lot 3a and on-street parking lot 3b, as illustrated in Fig. 7.

As seen in Fig. 6, the updated state information shows that the parking lot 2b has nearby streets that are now uncrowded and its "degree of congestion" has changed to "available". In addition, time intervals between user arrivals at, and time intervals between user departures from, the parking lots 2 have been changed. Furthermore, time intervals between user departures from the on-street parking lots 3 have been changed.

As described above, the route setting unit 105 extracts any parking lot or on-street parking lot that satisfies any one of the conditions (A), (B), and (C), as a candidate for a parking lot or an on-street parking lot that may be set on a moving route.

The route setting unit 105 checks if the first and second locations include any parking lot or on-street parking lot that satisfies the condition (A). As seen in Fig. 6, the parking lot 2b, the parking lot 2c, the parking lot 2d, the on-street parking lot 3a, and the on-street parking lot 3b are the parking lots or on-street parking lots having uncrowded nearby streets. In addition, the parking lot 2b is the parking lot or on-street parking lot whose "degree of congestion" is "available". Thus, the route setting unit 105 determines that the parking lot 2b, which satisfies the condition (A), is included in the first and second locations.

The route setting unit 105 checks if the first and second locations include any parking lot that satisfies the condition (B). As seen in Fig. 6, the parking lot 2b, the parking lot 2c, and the parking lot 2d are the parking lots having uncrowded nearby streets. In addition, the parking lot 2b and the parking lot 2c are the parking lots whose "degree of congestion" is "full" and whose time interval between user departures is equal to or less than the time interval between user arrivals. Thus, the route setting unit 105 determines that the parking lot 2b and the parking lot 2c, which satisfy the condition (B), are included in the first and second locations.

The route setting unit 105 checks if the first and second locations include any on-street parking lot that satisfies the condition (C). As seen in Fig. 6, the on-street parking lots 3a and 3b are the parking lots having uncrowded nearby streets. In addition, the on-street parking lot 3a and the on-street parking lot 3b are the on-street parking lots whose "degree of congestion" is "full" and whose time interval between user departures is equal to or less than 300 seconds. Thus, the route setting unit 105 determines that the on-street parking lots 3a and 3b, which satisfy the condition (C), are included in the first and second locations.

Consequently, as candidates for the parking lot or on-street parking lot that can be set on a moving route, the route setting unit 105 extracts the parking lots 2b and 2c and the on-street parking lots 3a and 3b from the first and second locations.

Next, the route setting unit 105 sets a route so that the vehicle will pass through at least one of the candidates for the parking lot and on-street parking lot that can be set on a moving route. In the example above, the route setting unit 105 sets a moving route so that the vehicle will pass through at least one of the parking lots 2b and 2c and the on-street parking lots 3a and 3b that have been extracted.

For this purpose, the route setting unit 105 sets a moving route so that the vehicle will pass through with priority a parking lot or on-street parking lot that satisfies the condition (A). At the same time, the route setting unit 105 sets a moving route so that the vehicle will pass through as many extracted parking lots or on-street parking lots as possible over a shorter distance. Preferably, the route setting unit 105 sets a moving route so that the vehicle will repeatedly cruise as many extracted parking lots or on-street parking lots as possible over a shorter distance.

As described above, the parking lot 2b now satisfies the condition (A). Hence, the route setting unit 105 sets a moving route so that the vehicle will pass by with priority the parking lot 2b, which satisfies the condition (A), as illustrated in Fig. 7.

As seen in Fig. 7, the parking lot 2b, which satisfies the condition (B), is provided near the street 4d. The parking lot 2c, which satisfies the condition (B), is provided near the street 4c. The on-street parking lot 3a, which satisfies the condition (C), is provided along the street 4d. The on-street parking lot 3b, which satisfies the condition (C), is provided along the street 4c.

Accordingly, the route setting unit 105 sets a route that goes through at least the streets 4c and 4d. As illustrated in Fig. 7, the streets 4c, 4d, 4f, and 4e form a circular street over the shortest distance. As described above, the route setting unit 105 sets a moving route so that the vehicle will pass through with priority the parking lot 2b, which satisfies the condition (A). Accordingly, the route setting unit 105 sets a moving route as indicated by arrows in Fig. 7. As seen above, the route setting unit 105 generates a moving route to guide the vehicle 1 to the parking lot 2b, not to the on-street parking lot 3a. As a result, the user can park the vehicle 1 more quickly.

As stated above, the navigation device 100 according to the first exemplary embodiment of the present invention includes the current position obtaining unit 101, the first location candidate obtaining unit 102, the second location candidate obtaining unit 103, the state information obtaining unit 104, and the route setting unit 105.

The current position obtaining unit 101 obtains the current position of a vehicle 1. The first location candidate obtaining unit 102 obtains a first location (e.g., parking lots 2a to 2d). The first location refers to a candidate location for a site where a predetermined service (e.g., vehicle parking service) can be received and where the vehicle 1 is allowed to wait when a predetermined service (e.g., vehicle parking service) is not provided immediately upon arrival at the site. The second location candidate obtaining unit 103 obtains a second location (e.g., on-street parking lots 3a and 3b). The second location refers to a candidate location for a site where a predetermined service (e.g., vehicle parking service) can be received and where the vehicle 1 is not allowed to wait when a predetermined service (e.g., vehicle parking service) is not provided immediately upon arrival at the site.

The state information obtaining unit 104 obtains, as state information, first location state information and second location state information. The first location state information refers to information about the state of provision of a predetermined service (e.g., vehicle parking service) at the first location (e.g., parking lots 2a to 2d) obtained by the first location candidate obtaining unit 102. The second location state information refers to information about the state of provision of a predetermined service (e.g., vehicle parking service) at the second location (e.g., on-street parking lots 3a and 3b) obtained by the second location candidate obtaining unit 103.

The route setting unit 105 sets a moving route for the vehicle 1 on the basis of the state information obtained by the state information obtaining unit 104.

In this way, the state information obtaining unit 104 obtains, as state information, the first location state information and the second location state information. Thus, the state information obtaining unit 104 can obtain information (first location state information) about the state of provision of a predetermined service (e.g., vehicle parking service) at the first locations 2a to 2d. The state information obtaining unit 104 can also obtain information (second location state information) about the state of provision of a predetermined service (e.g., vehicle parking service) at the second locations 3a and 3b. Then, the route setting unit 105 sets a moving route for the vehicle 1 on the basis of the state information (the first location state information and the second location state information) obtained by the state information obtaining unit 104. Hence, as described with reference to Fig. 5 by way of example, when any of a plurality of candidate destinations (e.g., parking lots 2a to 2d and on-street parking lots 3a and 3b) is involved in congestion, the navigation device 100 can provide a moving route for guiding the vehicle 1 to the plurality of candidate destinations taking into consideration, for example, whether the vehicle is allowed to wait at the candidate destinations.

Therefore, the navigation device 100 according to the first exemplary embodiment of the present invention can determine as appropriate a moving route by selecting from a plurality of service providing sites in view of the circumstances in which the vehicle 1 is or is not allowed to wait. As a result, the user of the navigation device 100 can efficiently receive a predetermined service (e.g., vehicle parking service).

The current position obtaining unit 101 in the navigation device 100 according to the first exemplary embodiment of the present invention may periodically obtain the current position of the vehicle 1. In this connection, the state information obtaining unit 104 may obtain the state information periodically. The route setting unit 105 may set a moving route for the vehicle 1 periodically on the basis of the state information periodically obtained by the state information obtaining unit 104.

This enables the navigation device 100 to change moving routes dynamically. In other words, the navigation device 100 can set a route on the basis of more recent state information while saving time and effort of the user of the navigation device 100 for manually conducting searches again. As a result, the user of the navigation device 100 can more quickly receive a predetermined service (e.g., vehicle parking service).

The route setting unit 105 in the navigation device 100 according to the first exemplary embodiment of the present invention determines whether it is suitable to guide the vehicle 1 to move to a first specific location, which is one specific location among a plurality of first locations 2a to 2d. Upon determining that it is suitable to guide the vehicle 1 to move to the first specific location, the route setting unit 105 may set a route to the first specific location. The determination of whether it is suitable to guide the vehicle 1 to a first specific location, which is one of first locations, is based on, for example, whether the vehicle can now receive a service immediately at the first specific location.

Basically, a first location is a site where a vehicle is allowed to wait until a predetermined service (e.g., vehicle parking service) can be received. Thus, when it is determined that a predetermined service can be more quickly received by moving the vehicle 1 to a specific location rather than cruising around, the above configuration employed here enables the vehicle 1 to move to the specific location. As a result, the user of the navigation device 100 can quickly receive a predetermined service.

The route setting unit 105 in the navigation device 100 according to the first exemplary embodiment of the present invention may also set a route for the vehicle 1 as described below. When the route setting unit 105 determines that it is not suitable to guide the vehicle 1 to the first specific location while setting a route to the location, the route setting unit 105 may set another route for the vehicle 1 on the basis of the current position of the vehicle 1 and the state information as of the time of the determination. That is, it is assumed here that the route setting unit 105 determines that it is not suitable to move to the location because the circumstances have changed in the course of traveling to the location. In this case, on the basis of the current position and state information as of the time of the determination, the route setting unit 105 may re-set a route so that the vehicle 1 will cruise near a first location and through a second location.

Thus, even when the circumstances (i.e., the first location state information and the second location state information) have changed, it is still possible to set a route in response to such changes, and accordingly the user of the navigation device 100 can receive a predetermined service more quickly.

The route setting unit 105 in the navigation device 100 according to the first exemplary embodiment of the present invention may also set a route to a second specific location as described below. It can be assumed here that the route setting unit 105 determines, while setting a route to a first specific location, that it is suitable to guide the vehicle 1 to a second specific location, which is different from the first specific location and which is one of a plurality of first locations. In this case, the route setting unit 105 may set a route to the second specific location on the basis of the current position of the vehicle 1 and the state information as of the time of the determination. In other words, upon determination that it is suitable to move to another specific location (hereinafter called a second specific location for convenience) different from the intended location, the route setting unit 105 may set a route to the second specific location. The determination of whether it is suitable to guide the vehicle 1 to a second specific location different from a first specific location is based on, for example, whether a service can now be received immediately at the second specific location, and whether the travel distance from the current position to the second specific location is shorter than that to the first specific location.

Thus, even when the circumstances (i.e., the first location state information and the second location state information) have changed, it is still possible to set a route in response to such changes, and accordingly the user of the navigation device 100 can receive a predetermined service more quickly.

A navigation method according to the first exemplary embodiment of the present invention includes the processes of obtaining the current position, obtaining a first location candidate, obtaining a second location candidate, obtaining state information, and setting a route.

In the process of obtaining the current position, the current position of a vehicle 1 is obtained. In the process of obtaining the first location candidate, a first location is obtained. The first location refers to a candidate location for a site where a predetermined service can be received and where the vehicle 1 is allowed to wait when the predetermined service is not provided immediately upon arrival at the site (e.g., parking lots 2a to 2d). Examples of such predetermined service may include a vehicle parking service. In the process of obtaining the second location candidate, a second location is obtained. The second location refers to a candidate location for a site where a predetermined service can be received and where the vehicle 1 is not allowed to wait when the predetermined service is not provided immediately upon arrival at the site (e.g., on-street parking lots 3a and 3b).

In the process of obtaining state information, first location state information and second location state information, which are collectively state information, are obtained. The first location state information refers to information about the state of provision of a predetermined service at the first location obtained through the process of obtaining a first location candidate. The second location state information refers to information about the state of provision of a predetermined service at the second location obtained through the process of obtaining a second location candidate.

In the process of setting a route, a moving route for the vehicle 1 is set on the basis of the state information obtained through the process of obtaining state information.

Such a navigation method provides functional effects similar to those provided by the above-described navigation device 100.

A navigation program according to the first exemplary embodiment of the present invention causes a computer to execute the aforementioned processes of obtaining the current position, obtaining a first location candidate, obtaining a second location candidate, obtaining state information, and setting a route.

Such a navigation program provides functional effects similar to those provided by the above-described navigation device 100.

(Second Exemplary Embodiment)

A navigation device 100A according to a second exemplary embodiment of the present invention will now be described.

In the second exemplary embodiment, configurations and operations are described for applying the present invention to those parking lots which place an upper limit to the number of vehicles being allowed to wait at a full parking lot until it becomes available. Specific examples of such parking lots may include a parking lot which prohibits waiting on a street and which has a limited waiting space.

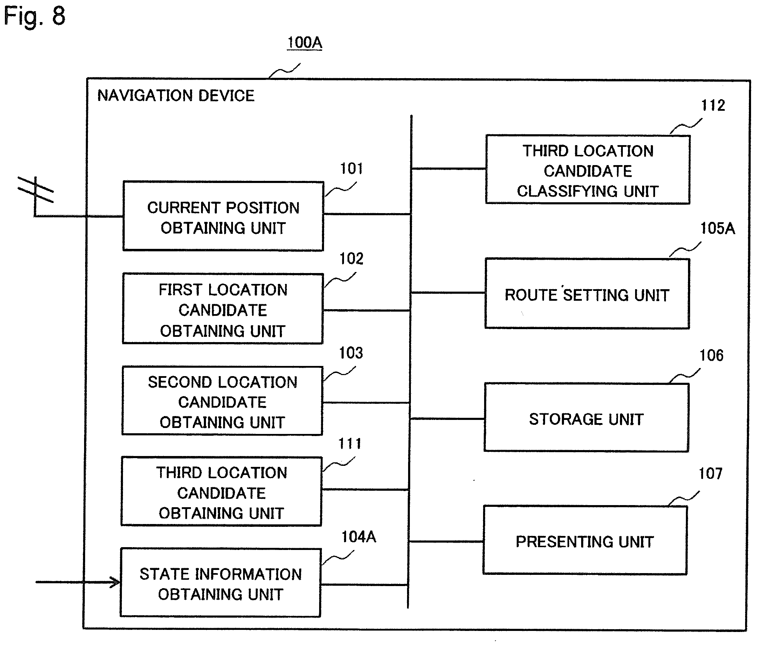

Fig. 8 is a block diagram illustrating a configuration of the navigation device 100A. The orientation indicated by an arrow in the figure represents an example only, and it does not limit the direction of a signal between blocks.

The navigation device 100A is mounted on a vehicle (not illustrated). As illustrated in Fig. 8, the navigation device 100A includes a current position obtaining unit 101, a first location candidate obtaining unit 102, a second location candidate obtaining unit 103, a third location candidate obtaining unit 111, a state information obtaining unit 104A, a third location candidate classifying unit 112, a route setting unit 105A, a storage unit 106, and a presenting unit 107.

The current position obtaining unit 101, the first location candidate obtaining unit 102, the second location candidate obtaining unit 103, the third location candidate obtaining unit 111, the state information obtaining unit 104A, the third location candidate classifying unit 112, the route setting unit 105A, the storage unit 106, and the presenting unit 107 are connected to a single hub. Note that the storage unit 106 and the presenting unit 107 are not necessarily required for the present invention. Thus, the storage unit 106 and the presenting unit 107 may be omitted in the present invention.

In Fig. 8, reference signs similar to those indicated in Figs. 1 to 7 are given to components similar to those illustrated in Figs. 1 to 7.

A comparison is made here between Figs. 1 and 8. Fig. 8 is different from Fig. 1 in that the third location candidate obtaining unit 111 and the third location candidate classifying unit 112 are included.

The third location candidate obtaining unit 111 obtains a third location. A third location refers to a candidate location satisfying the following conditions (1) and (2):

(1) A site where the user can receive a predetermined service (e.g., vehicle parking service); and
(2) A site where a vehicle is allowed to wait, when a predetermined service is not provided immediately upon arrival at the site (i.e., the site described in (1)), as long as the number of waiting vehicles, which is the current number of waiting vehicles, is smaller than the number of waiting-allowed vehicles, which is a maximum permissible number of vehicles being allowed to wait.

The number of third locations obtained by the third location candidate obtaining unit 111 is not limited to one. That is, the third location candidate obtaining unit 111 may obtain two or more third locations.

The third location candidate classifying unit 112 classifies a third location as either the first location or the second location, on the basis of information about the number of waiting vehicles, which is the information about the number of vehicles waiting at the third location, and of information about the number of waiting-allowed vehicles, which is the information about the number of vehicles that are allowed to wait at the third location.

The state information obtaining unit 104A obtains, in addition to the first location state information and the second location state information, the third location state information which includes at least the information about the number of waiting vehicles and the information about the number of waiting-allowed vehicles, all of which are collectively the state information. That is, the state information obtaining unit 104A obtains the first location state information, the second location state information, and the third location state information. The first location state information represents the state of provision of a predetermined service at the first location. The second location state information represents the state of provision of a predetermined service at the second location. The third location state information represents the state of provision of a predetermined service at the first location, the information including at least the information about the number of waiting vehicles and the information about the number of waiting-allowed vehicles.

The route setting unit 105A sets a moving route for the vehicle 1, by regarding the third location as either the first location or the second location depending on the result of classification made by the third location candidate classifying unit 112.

In other words, for the purpose of setting a route, the route setting unit 105A determines whether a new vehicle can be parked or is allowed to wait at the third location on the basis of the latest state information. If a vehicle can be parked or is allowed to wait at the third location, the route setting unit 105A regards the third location as equivalent to a first location (parking lot 2). On the other hand, if a vehicle is not allowed to wait at the third location, the route setting unit 105A regards the third location as equivalent to a second location (on-street parking lot 3).

A configuration of the navigation device 100A has been described above.

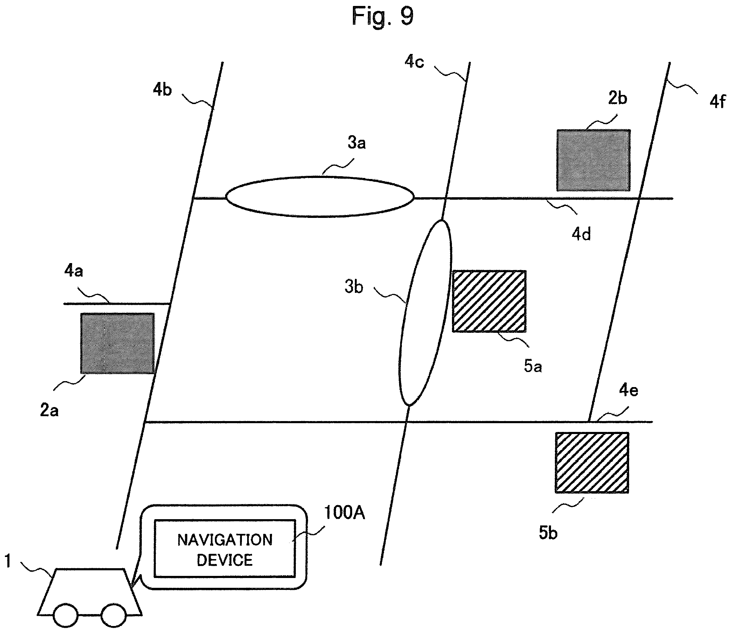

Fig. 9 is a schematic diagram illustrating an example environment in which the navigation device 100A is used. In Fig. 9, reference signs similar to those indicated in Figs. 1 to 8 are given to components similar to those illustrated in Figs. 1 to 8.

As illustrated in Fig. 9, a plurality of streets 4a, 4b, 4c, 4d, 4e, and 4f are provided. A plurality of parking lots 2a and 2b are provided in the vicinity of any one of the streets 4a to 4f. On-street parking lots 3a and 3b are provided along any one of the streets 4a to 4f. In addition, waiting-allowed parking lots 5a and 5b are provided in the vicinity of any one of the streets 4a to 4f. The navigation device 100A is mounted on a vehicle 1, as illustrated in Fig. 9.

As described above, the plurality of parking lots 2a and 2b correspond to the first location. The on-street parking lots 3a and 3b correspond to the second location. The waiting-allowed parking lots 5a and 5b correspond to the aforementioned third location.

The waiting-allowed parking lots 5a and 5b are hereinafter collectively called a waiting-allowed parking lot 5 unless it is necessary to distinguish among them.

The following describes operations of the navigation device 100A.

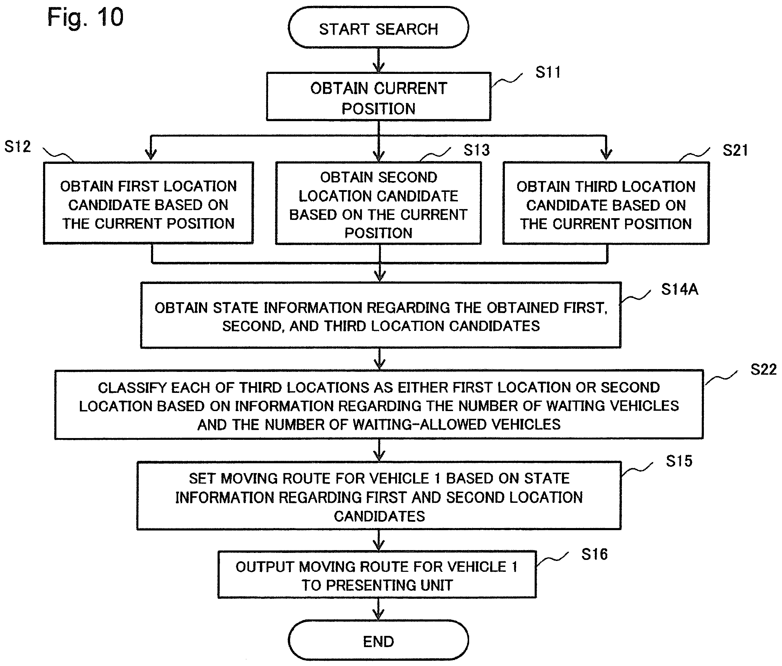

Fig. 10 is a flow diagram illustrating operations of the navigation device 100A. The following example assumes that a route search is conducted with the navigation device 100A so that a vehicle parking service can be quickly provided.

A comparison is made here between Figs. 3 and 10. Fig. 10 is different from Fig. 3 in that S21 and S22 are added. Furthermore, in connection with the addition of S21 and S22, the content of S 14A is different from S 14.

As indicated in Fig. 10, upon starting a route search, the navigation device 100A first obtains the current position of the vehicle 1 (Step S 11).

Next, the navigation device 100A obtains candidates for the first, second, and third locations on the basis of the current position that has been obtained (Steps S12, S13, and S21). The first location candidate is obtained by the first location candidate obtaining unit 102 (S12). The second location candidate is obtained by the second location candidate obtaining unit 103 (S13). The third location candidate is obtained by the third location candidate obtaining unit 111 (S21).

A specific example of a method for obtaining a candidate may be automatically extracting a candidate closest to the current position of the vehicle 1 from all the candidates for each of the first, second, and third locations.

Next, the navigation device 100A obtains the state information regarding each of the obtained first, second, and third location candidates (Step S 14A). A specific example of obtaining the state information may be obtaining the latest information through the use of the state information obtaining unit 104A. That is, for example, the state information obtaining unit 104A obtains the first location state information, the second location state information, and the third location state information, collectively as state information. Alternatively, if the storage unit 106 holds state information that is recent enough, the state information obtaining unit 104A may take such state information stored in the storage unit 106.

Next, the third location candidate classifying unit 112 classifies the third location as either the first location or the second location on the basis of the information about the number of waiting vehicles and the information about the number of waiting-allowed vehicles (S22). In other words, the process in this step is the action of regarding the third location as equivalent to either the first location or the second location. As described above, the information about the number of waiting vehicles refers to the information about the number of vehicles waiting at the third location. The information about the number of waiting-allowed vehicles refers to the information about the number of vehicles that are allowed to wait at the third location.

After the process of classifying the third location as either the first or second location (S22), the route setting unit 105A sets a moving route for the vehicle 1 on the basis of the state information regarding candidates for the first and second locations (Step S15). The route setting unit 105A sets a moving route for the vehicle 1 so that the vehicle 1 will pass by the first location and pass through the second location, on the basis of the state information obtained by the state information obtaining unit 104A. Specific setting methods will be described later.

That is, for setting a moving route for the vehicle 1, the navigation device 100A determines in advance, through the use of the third location candidate classifying unit 112 and on the basis of the latest information, whether the vehicle 1 can now be parked in, or whether it is allowed to wait at, the third location, namely the waiting-allowed parking lot 5. If the vehicle 1 can be parked in or is allowed to wait at the waiting-allowed parking lot 5, the third location candidate classifying unit 112 regards the waiting-allowed parking lot 5 as equivalent to a parking lot 2 (a first location). If the vehicle 1 is not allowed to wait at the waiting-allowed parking lot 5, the third location candidate classifying unit 112 regards the waiting-allowed parking lot 5 as equivalent to an on-street parking lot 3 (a second location).

Finally, the route setting unit 105A outputs the determined moving route for the vehicle 1 to the presenting unit 107 (Step S16) and exits the search process. The presenting unit 107 presents the moving route for the vehicle 1 that has been set by the route setting unit 105A. Thus, the user of the navigation device 100A can recognize the moving route for the vehicle 1.

Operations of the navigation device 100A have been described above.

The following describes a specific example of the operations of the navigation device 100A in more detail referring to the drawings.

The following example assumes that a vehicle 1, parking lots 2, on-street parking lots 3, and streets 4 are located as illustrated in Fig. 9 and that a search for a nearby parking lot or on-street parking lot is conducted with the navigation device 100A.

When the navigation device 100A starts the search process, the current position obtaining unit 101 obtains the current position of the vehicle 1 as described above. Then, the first location candidate obtaining unit 102 obtains nearby parking lots 2a and 2b as the first locations. The second location candidate obtaining unit 103 obtains on-street parking lots 3a and 3b as the second locations. The third location candidate obtaining unit 111 obtains waiting-allowed parking lots 5a and 5b as the third locations. The state information obtaining unit 104A then obtains, as state information, first location state information, second location state information, and third location state information via a network, for example.

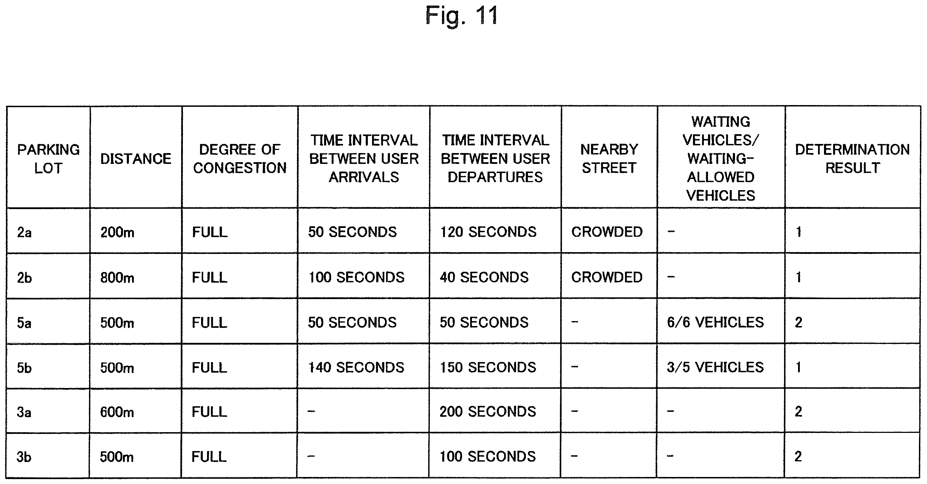

Fig. 11 illustrates an example of the state information obtained by the navigation device 100A.

The example in Fig. 11 assumes that the state information obtaining unit 104A obtains, as the first location state information, distances to the parking lots 2a and 2b, degrees of congestion in the parking lots 2a and 2b, time intervals between user arrivals, time intervals between vehicle departures from the parking lots 2a and 2b, and degrees of congestion on streets near the parking lots 2a and 2b.

Likewise, it is assumed that the state information obtaining unit 104A obtains, as the second location state information, distances to the on-street parking lots 3a and 3b, degrees of congestion in the on-street parking lots 3a and 3b, time intervals between user arrivals, time intervals between vehicle departures from the on-street parking lots 3a and 3b, and degrees of congestion on streets near the on-street parking lots 3a and 3b.

It is also assumed that the state information obtaining unit 104A obtains, as the third location state information, distances to the waiting-allowed parking lots 5a and 5b, degrees of congestion in the waiting-allowed parking lots 5a and 5b, and time intervals between user arrivals. It is assumed that the state information obtaining unit 104A further obtains time intervals between vehicle departures from the waiting-allowed parking lots 5a and 5b, degrees of congestion on streets near the waiting-allowed parking lots 5a and 5b, the number of waiting vehicles, and the number of waiting-allowed vehicles.

That is, the third location state information additionally includes, regarding a third location, namely the waiting-allowed parking lots 5, the number of waiting vehicles and the number of waiting-allowed vehicles as of the time when the state information is obtained.

The example in Fig. 11 shows that, in the waiting-allowed parking lot 5a, the number of waiting vehicles has already reached the number of waiting-allowed vehicles. On the other hand, the waiting-allowed parking lot 5b can still accept vehicles considering the number of waiting-allowed vehicles.

Thus, the third location candidate classifying unit 112 assigns the determination result "1" to the waiting-allowed parking lot 5b, determining that it is equivalent to the parking lots 2a and 2b, which correspond to the first location. On the other hand, the third location candidate classifying unit 112 assigns the determination result "2" to the waiting-allowed parking lot 5a, determining that it is equivalent to the on-street parking lots 3a and 3b, which correspond to the second location. In this way, the third location candidate classifying unit 112 classifies the waiting-allowed parking lot 5b as either the parking lot 2 (the first location) or the on-street parking lot 3 (the second location). Then, the route setting unit 105A generates a moving route for the vehicle 1, by regarding the third location as either the first location or the second location according to the result of classification made by the third candidate location classifying unit 112. Specifically, the route setting unit 105A generates a moving route in the manner as described above with reference to Figs. 4 and 5.

As stated above, the navigation device 100A according to the second exemplary embodiment of the present invention further includes the third location candidate obtaining unit 111 and the third location candidate classifying unit 112.

The third location candidate obtaining unit 111 obtains a third location (e.g., waiting-allowed parking lots 5a and 5b). As described above, a third location refers to a candidate location satisfying the following conditions (1) and (2):

(1) A site where the user can receive a predetermined service (e.g., vehicle parking service); and
(2) A site where the vehicle 1 is allowed to wait, when a predetermined service (e.g., vehicle parking service) is not provided immediately upon arrival at the site (i.e., the site described in (1)), as long as the number of waiting vehicles, which is the current number of waiting vehicles, is smaller than the number of waiting-allowed vehicles, which is a maximum permissible number of vehicles being allowed to wait.

The third location candidate classifying unit 112 classifies the third location (e.g., waiting-allowed parking lots 5a and 5b) as either the first location (e.g., parking lots 2a and 2b) or the second location (e.g., on-street parking lots 3a and 3b) on the basis of the information about the number of waiting vehicles and the information about the number of waiting-allowed vehicles. The information about the number of waiting vehicles refers to the information about the number of vehicles waiting at the third location. The information about the number of waiting-allowed vehicles refers to the information about the number of vehicles that are allowed to wait at the third location.

The state information obtaining unit 104A obtains, as state information, third location state information in addition to first location state information and second location state information. The third location state information represents the state of provision of a predetermined service at the third location obtained by the third location candidate obtaining unit 111, the information including at least the information about the number of waiting vehicles and the information about the number of waiting-allowed vehicles.

The route setting unit 105A sets a moving route for the vehicle 1, by regarding the third location as either the first location or the second location according to the result of classification made by the third candidate location classifying unit 112.

Employing the above-described configuration enables setting of an appropriate route even when destination candidates include a location whose state dynamically changes depending on whether the vehicle 1 can be parked or whether the vehicle 1 is allowed to wait.

The navigation device 100A can also be applied to the case where the number of waiting-allowed vehicles at the waiting-allowed parking lot 5 is limited. Comparing the most recent number of vehicles waiting for an available space at the waiting-allowed parking lot 5 with the number of waiting-allowed vehicles at the waiting-allowed parking lot 5 makes it possible to determine whether the vehicle 1 will be allowed to wait at the waiting-allowed parking lot 5 upon arrival. Therefore, the user of the navigation device 100A can more quickly receive a predetermined service due to provision of a moving route that is more suitable for the current circumstances.

The third location candidate classifying unit 112 may make the classification taking into consideration the distance to the location, time intervals between vehicle arrivals at the location, and time intervals between vehicle departures, in addition to the number of waiting vehicles and the number of waiting-allowed vehicles. Employing such configuration and operations enables the navigation device 100A to reflect the passage of time in setting a moving route. Hence, the navigation device 100A can set a more accurate route. As a result, the user of the navigation device 100A can more quickly receive a service.

Except for what have been identified above, configurations and operations illustrated in the present exemplary embodiment agree with those described in the first exemplary embodiment. Additional configurations and operations described in the first exemplary embodiment can also be applied to the present exemplary embodiment.

(Third Exemplary Embodiment)

A navigation system 1000B according to a third exemplary embodiment of the present invention will now be described with respect to its configuration.

In the third exemplary embodiment, a navigation system for taxi companies is described. Provided services are information services for taxi companies in order that a taxi vehicle can transition to the state in which a passenger is picked up (the occupied state). Such provided services may be called taxi occupation services.

In the present exemplary embodiment, configurations and operations for applying the present invention to a navigation device that can provide information necessary for quickly transitioning to the occupied state are described.

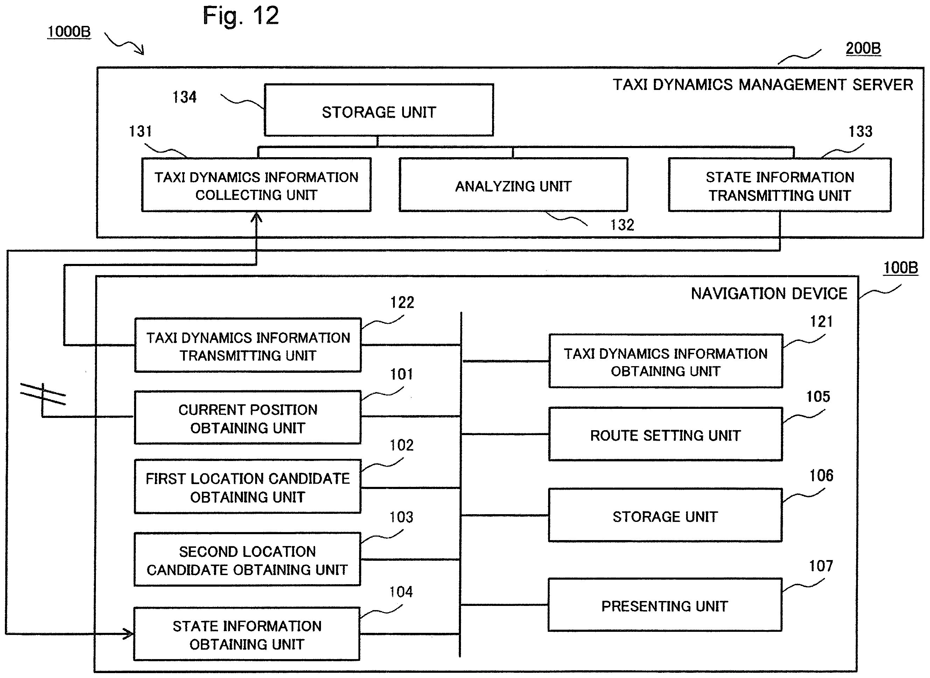

Fig. 12 is a block diagram illustrating a configuration of the navigation system 1000B. The orientation indicated by an arrow in the figure represents an example only, and it does not limit the direction of a signal between blocks. In Fig. 12, reference signs similar to those indicated in Figs. 1 to 11 are given to components similar to those illustrated in Figs. 1 to 11.

As illustrated in Fig. 12, the navigation system 1000B includes a navigation device 100B and a taxi dynamics management server 200B. The navigation device 100B is mounted on a taxi vehicle.

As illustrated in Fig. 12, the navigation device 100B includes a taxi dynamics information transmitting unit 122, a current position obtaining unit 101, a first location candidate obtaining unit 102, and a second location candidate obtaining unit 103. The navigation device 100B further includes a state information obtaining unit 104, a taxi dynamics information obtaining unit 121, a route setting unit 105, a storage unit 106, and a presenting unit 107.

The taxi dynamics information transmitting unit 122, the current position obtaining unit 101, the first location candidate obtaining unit 102, the second location candidate obtaining unit 103, the state information obtaining unit 104, the taxi dynamics information obtaining unit 121, the route setting unit 105, the storage unit 106, and the presenting unit 107 are connected to a single hub. Note that the storage unit 106 and the presenting unit 107 are not necessarily required for the present invention. Thus, the storage unit 106 and the presenting unit 107 may be omitted in the present invention.

A comparison is made here between Figs. 1 and 12. The navigation device 100B in Fig. 12 is different from the navigation device 100 in Fig. 1 in that the navigation device 100B includes the taxi dynamics information obtaining unit 121 and the taxi dynamics information transmitting unit 122. Fig. 12 is further different from Fig. 1 in that the taxi dynamics management server 200B is additionally provided.

The taxi dynamics information obtaining unit 121 obtains information about dynamics of a taxi vehicle. The dynamics information refers to information about the state of taxi services. Specifically, the dynamics information includes state information such as empty, pickup, occupied, absent, and out-of-service.

The taxi dynamics information transmitting unit 122 transmits the latest positional information and dynamics information regarding a taxi vehicle to the taxi dynamics management server 200B. The positional information regarding a taxi vehicle refers to information indicating the position of a taxi vehicle 11. The dynamics information regarding a taxi vehicle refers to information about dynamics of the taxi vehicle 11.

The taxi dynamics management server 200B includes a taxi dynamics information collecting unit 131, an analyzing unit 132, a state information transmitting unit 133, and a storage unit 134. The taxi dynamics information collecting unit 131, the analyzing unit 132, the state information transmitting unit 133, and the storage unit 134 are connected to a single hub.

The taxi dynamics information collecting unit 131 obtains and collects the latest positional information and dynamics information regarding a taxi vehicle transmitted by the taxi dynamics information transmitting unit 122. In addition, the taxi dynamics information collecting unit 131 stores such information into the storage unit 134, with each of the information pieces associated with taxi identification information for identifying a taxi vehicle and with time information.

Examples of the information for identifying a taxi vehicle may include a radio number, a phone number on a communication line, a sender address, a sending terminal MAC (media access control) address, a network device identification number, and a terminal identification number. Examples of the time information may include reception time. Alternatively, the time when positional information or dynamics information regarding a taxi vehicle is obtained or sent from the taxi dynamics information transmitting unit 122 may be used as the time information.

The analyzing unit 132 generates state information on the basis of the information obtained from the taxi dynamics information collecting unit 131. The analyzing unit 132 carries out an analysis by utilizing information gathered from a plurality of taxi vehicles. More specifically, the analyzing unit 132 can obtain information about when and where dynamics information has changed, by monitoring changes over time in the positional information and dynamics information regarding each taxi vehicle. The analyzing unit 132 can also obtain information about when, where, and how taxi vehicles are distributed, by looking at a distribution of taxi vehicles in each time zone. Through these analyses, the analyzing unit 132 can calculate a time interval between empty taxi vehicle arrivals and a time interval between passenger ridings in a taxi at a taxi stand, as state information. In addition, the analyzing unit 132 can calculate a time interval between passages of taxi vehicles and a time interval between passenger ridings in a taxi on a street, as state information.

The time interval between empty taxi vehicle arrivals at a taxi stand (time interval between empty taxi arrivals) refers to an average time from arrival of an empty taxi vehicle at a taxi stand to arrival of the following empty taxi vehicle at the taxi stand. The time interval between passages of taxi vehicles on a street (time interval between passages of empty taxis) refers to an average time from passage of a taxi vehicle through a cruising-allowed on-street taxi stand to passage of the following taxi vehicle through the cruising-allowed on-street taxi stand. The time interval between passenger ridings refers to an average time from arrival of a passenger at a taxi stand or a cruising-allowed on-street taxi stand to arrival of the following passenger at the taxi stand or the cruising-allowed on-street taxi stand.

The state information transmitting unit 133 transmits the state information obtained by the analyzing unit 132 to the navigation device 100B. Concerning when to transmit state information, the state information transmitting unit 133 may transmit the information triggered by the state information transmitting unit 133 or in response to a request from the navigation device 100B.

The storage unit 134 temporarily or permanently holds the information necessary for performing processes in the taxi dynamics management server 200B. The storage unit 134 may be composed of, for example, any one of an HDD, an SSD, flash memory such as an SD card, a DVD, DRAM, or any combination thereof.

A configuration of the navigation system 1000B has been described above.

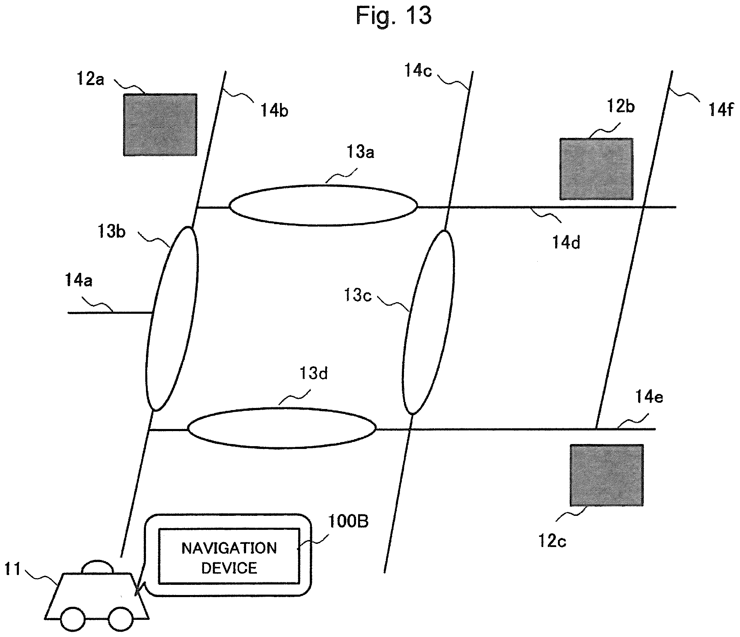

Fig. 13 is a schematic diagram illustrating an example environment in which the navigation device 100B is used. In Fig. 13, reference signs similar to those illustrated in Figs. 1 to 12 are given to components similar to those illustrated in Figs. 1 to 12.

As illustrated in Fig. 13, a plurality of streets 14a, 14b, 14c, 14d, 14e, and 14f are provided. A plurality of taxi stands 12a, 12b, and 12c are provided in the vicinity of any one of the streets 14a to 14f. Cruising-allowed on-street taxi stands 13a, 13b, 13c, and 13d are provided along any one of the streets 14a to 14f. Cruising-allowed on-street taxi stands 13a, 13b, 13c, and 13d may be called cruising-allowed streets. The navigation device 100B is mounted on the taxi vehicle 11, as illustrated in Fig. 13.

The plurality of taxi stands 12a, 12b, and 12c correspond to the first location. The cruising-allowed on-street taxi stands 13a, 13b, 13c, and 13d correspond to the second location.

The streets 14a, 14b, 14c, 14d, 14e, and 14f are hereinafter collectively called a street 14 unless it is necessary to distinguish among them. The taxi stands 12a, 12b, and 12c are hereinafter collectively called a taxi stand 12 unless it is necessary to distinguish among them. The cruising-allowed on-street taxi stands 13a, 13b, 13c, and 13d are hereinafter collectively called a cruising-allowed on-street taxi stand 13 unless it is necessary to distinguish among them.

The following describes operations of the navigation system 1000B.

The navigation system described below is intended to provide effective navigation so that a taxi vehicle 11 equipped with the navigation device 100B can quickly change to the occupied state, with the assumption that a taxi stand 12 and a cruising-allowed on-street taxi stand 13 are given.

Unlike the first and second exemplary embodiments, in the third exemplary embodiment, a route is set so that the taxi vehicle can change to the occupied state in a shorter time. Thus, an algorithm for setting the route is different from those in the first and second exemplary embodiments. For example, in operations for parking a vehicle in a parking lot as in the first and second exemplary embodiment, it is desirable to set a moving route so as to avoid crowded streets to the extent possible. On the other hand, a moving taxi can change to the occupied state irrespective of whether a street is crowded, as long as the street has a cruising-allowed on-street taxi stand. Thus, in order for a taxi to change to the occupied state, it is not desirable to extract candidate routes based on degrees of congestion. Instead, congestion should be regarded as a "prolonged moving time", and it is desirable to estimate required times for changing to the occupied state for all the candidate routes and set a route having an optimum required time.

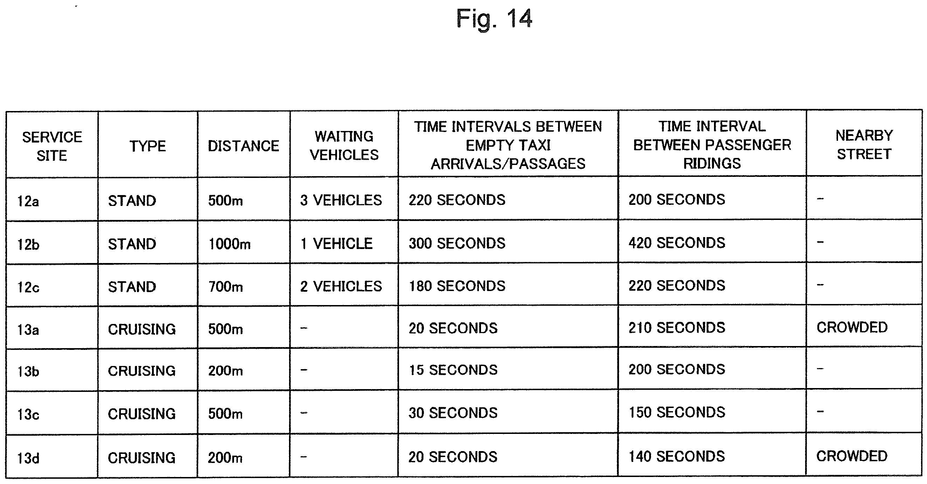

Fig. 14 illustrates an example of the state information obtained by the navigation device 100B.

The example in Fig. 14 assumes that the first location candidate obtaining unit 102 and the second location candidate obtaining unit 103 obtain a first location and a second location, respectively, which are present within a radius of 1,200 m in a predetermined direction from the current position of the taxi vehicle 11 in Fig. 13. Accordingly, the state information obtaining unit 104 obtains state information regarding the first locations (taxi stands 12a, 12b, and 12c) and the second locations (cruising-allowed on-street taxi stands 13a, 13b, 13c, and 13d), which are located within a radius of 1,200 m from the current position of the taxi vehicle 11 in its traveling direction (the upward direction on the page).

The example in Fig. 14 assumes that the state information obtaining unit 104 obtains, as the first location state information, locations of the taxi stands 12a, 12b, and 12c, types of the taxi stands 12a, 12b, and 12c, and distances to the taxi stands 12a, 12b, and 12c. It is also assumed that the state information obtaining unit 104 obtains the number of vehicles waiting at the taxi stands 12a, 12b, and 12c, and time intervals between arrivals of empty taxi vehicles 11. In addition, it is assumed that the state information obtaining unit 104 obtains time intervals between passenger ridings at the taxi stands 12a, 12b, and 12c, and degrees of congestion on streets near the taxi stands 12a, 12b, and 12c. The types of the taxi stands 12a, 12b, and 12c are information for distinguishing between a taxi stand ("Stand" in Fig. 14) and a cruising-allowed on-street taxi stand ("Cruising" in Fig. 14). The aforementioned items of the first location state information are examples only, and thus other items may be used.

Likewise, the example in Fig. 14 assumes that the state information obtaining unit 104 obtains, as the second location state information, locations of cruising-allowed taxi stands 13a, 13b, 13c, and 13d, and types of the cruising-allowed taxi stands 13a, 13b, 13c, and 13d. It is also assumed that the state information obtaining unit 104 obtains distances to the cruising-allowed taxi stands 13a, 13b, 13c, and 13d, and time intervals between passages of empty taxi vehicles 11. In addition, it is assumed that the state information obtaining unit 104 obtains time intervals between passenger ridings at the cruising-allowed taxi stands 13a, 13b, 13c, and 13d, and degrees of congestion on streets near the cruising-allowed taxi stands 13a, 13b, 13c, and 13d. The types of the cruising-allowed taxi stands 13a, 13b, 13c, and 13d are information for distinguishing between a taxi stand ("Stand" in Fig. 14) and a cruising-allowed on-street taxi stand ("Cruising" in Fig. 14). The aforementioned items of the second location state information are examples only, and thus other items may be used.

First, the route setting unit 105 determines a destination taxi stand selected from the extracted taxi stands 12a, 12b, and 12c. Specifically, for example, the route setting unit 105 may estimate a time for the taxi vehicle to change to the occupied state to determine whether the route is directed to a taxi stand or goes through an on-street taxi stand on the basis of the estimated time. The following description assumes that a distance of each on-street taxi stand is 300 m and that the moving speed on a usual or crowded nearby street is 300 m per minute or 150 m per minute, respectively.

Concerning a taxi stand, a time period for changing to the occupied state can be estimated by using the Equation (1):

$$(\text{Estimated Time Period for Changing to Occupied State}) = (\text{Time Interval between Passenger Ridings}) \times \{1 + (\text{the Number of Waiting Vehicles}) + (\text{Moving Time}) \div (\text{Time Interval between Arrivals of Empty Taxis}) - (\text{Moving Time}) \div (\text{Time Interval between Passenger Ridings})\}$$

$$\text{Equation (1)}$$

The "Moving Time" in Equation (1) refers to a time taken for moving to the extracted taxi stand.

According to the Equation (1), estimated times for changing to the occupied state for the taxi stands 12a, 12b, and 12c are 970 seconds, 917 seconds, and 765 seconds, respectively.

A probability of changing to the occupied state at an on-street taxi stand can be estimated by using the Equation (2):

$$(\text{Probability of Changing to Occupied State}) = (\text{Time Interval between Passages of Empty Taxis}) \div (\text{Time Interval between Passenger Ridings})$$

$$\text{Equation (2)}$$

Furthermore, an expected value of an estimated time period for changing to the occupied state in the case where the taxi keeps cruising on-street taxi stands until changed to the occupied state can be obtained by using the Equation (3), which is based on the result of the Equation (2):

$$(\text{Estimated Time Period for Changing to Occupied State}) = (\text{Moving Time per Single Cruising}) \div (\text{Probability of Changing to Occupied State})$$

$$\text{Equation (3)}$$

As illustrated in Fig. 13, one candidate route for cruising on-street taxi stands may be passing the on-street taxi stands 13b, 13a, 13c, and 13d. The route setting unit 105 obtains an estimated time period for changing to the occupied state on the basis of values shown in Fig. 14 as well as on the Equations (2) and (3). The moving time per single cruising is 360 seconds, the probability of changing to the occupied state is 42%, and the estimated time period for changing to the occupied state is 845 seconds.

Accordingly, the route setting unit 105 determines the taxi stand 12c to be the destination representing the shortest estimated time period for changing to the occupied state.

Next, the route setting unit 105 searches for a moving route destined for the taxi stand 12c, taking into consideration the possibility to pass through cruising-allowed on-street taxi stands such as 13a, 13b, 13c, or 13d. In searching for a moving route, a time period for changing to the occupied state can be estimated on the basis of, for example, the moving time and the probability of changing to the occupied state at an on-street taxi stand.

Candidates for a moving route to the taxi stand 12c include a route passing through the on-street taxi stand 13d (hereinafter called the route 1), a route passing through the on-street taxi stands 13b, 13a, and 13c (hereinafter called the route 2), and a route passing through the on-street taxi stands 13b and 13a and the taxi stand 12b (hereinafter called the route 3).

Then, the moving times to the taxi stand 12c taking the routes 1, 2, and 3 are 200 seconds, 320 seconds, and 320 seconds, respectively. The probabilities of changing to the occupied state by the time of arrival at the taxi stand 12c taking the route 1, 2, and 3 are 14%, 33%, and 16%, respectively, according to the Equation (2).

The time period for changing to the occupied state at the taxi stand 12c depends on degrees of congestion along the routes and selection of a different route. Recalculation by substituting the Moving Time term in the Equation (1) with the values given above produces 765 seconds, 885 seconds, and 885 seconds, respectively.

Hence, calculation of expected values of time periods for changing to the occupied state taking into consideration the probabilities of changing to the occupied state during cruising produces 686 seconds for the route 1, 698 seconds for the route 2, and 794 seconds for the route 3. Therefore, the route setting unit 105 can generate, for example, the route 1, which is a moving route destined for the taxi stand 12c passing through the cruising-allowed on-street taxi stand 13d, on the basis of the state information illustrated in Fig. 14.

As seen above, in the navigation device 100B according to the third exemplary embodiment of the present invention, a predetermined service is intended for a taxi vehicle 11.

Candidate locations for a taxi stand 12 correspond to the first location. The taxi stand 12 represents a candidate location for a site where the taxi vehicle 11 can receive a service to pick up a passenger and where the taxi vehicle 11 is allowed to wait when the service to pick up a passenger is not provided immediately upon arrival at the site.

A cruising-allowed on-street taxi stand 13 corresponds to the second location. The cruising-allowed on-street taxi stand 13 is a candidate location satisfying the conditions (3) and (4) below.

(3) A site where the taxi vehicle 11 can receive a service to pick up a passenger; and
(4) A site where the taxi vehicle 11 is not allowed to wait when the service to pick up a passenger is not provided immediately upon arrival at the site (i.e., the site described in (3)).

Employing such configuration and operations makes it possible to present a more suitable movement strategy to taxi services as appropriate for the momentarily changing circumstances in order to change to the occupied state more quickly.

That is, as state information, information relating to operational efficiency of taxi services, or more specifically, a time interval between arrivals of empty taxis and a time interval between passenger ridings are obtained. When such information leads to the determination that taxi cruising provides a higher efficiency, the navigation device 100B sets a route that passes through a cruising-allowed on-street taxi stand 13. On the other hand, when it is determined that waiting at a specific taxi stand 12 provides a higher efficiency, the navigation device 100B sets a moving route destined for the taxi stand 12. In this way, the navigation device 100B can present a moving route by which the taxi vehicle is likely to change to the occupied state more quickly.

The taxi dynamics management server 200B according to the third exemplary embodiment of the present invention further includes the taxi dynamics information collecting unit 131 and the analyzing unit 132. The taxi dynamics information collecting unit 131 collects taxi positional information indicating the position of the taxi vehicle 11 and taxi dynamics information regarding dynamics of the taxi vehicle 11. The taxi dynamics information collecting unit 131 then associates both the taxi positional information and the taxi dynamics information with taxi identification information for identifying the taxi vehicle 11 and with time information. The analyzing unit 132 generates state information based on the information obtained from the taxi dynamics information collecting unit 131. Fig. 12 shows that the taxi dynamics information collecting unit 131 and the analyzing unit 132 are disposed in the taxi dynamics management server 200B, which is separate from the navigation device 100B. Although disposed in the taxi dynamics management server 200B, both the taxi dynamics information collecting unit 131 and the analyzing unit 132 can function as part of the navigation device 100B. In other words, the taxi dynamics information collecting unit 131 and the analyzing unit 132 may be included in the navigation device 100B.

Hence, the route setting unit 105 can generate a moving route for the taxi vehicle 11, on the basis of various pieces of state information (taxi identification information and time information, taxi positional information and taxi dynamics information) that have been associated with one another by the taxi dynamics information collecting unit 131. Therefore, the navigation device 100B can present a more suitable movement strategy for taxi services to achieve changing to the occupied state more quickly.

(Fourth Exemplary Embodiment)

In a fourth exemplary embodiment, application of the present invention to a return system in one-way car sharing services is described.

Car sharing services operational in recent years may ask the user to reserve in advance a parking lot to which the vehicle will be returned. Specifying in advance a place to which the vehicle will be returned lacks flexibility and hampers convenience. Conversely, omitting prior reservation may also result in hampering convenience because it is uncertain whether parking lots near the desired place are available when the vehicle is returned. At a specific parking lot accepting returned vehicles, the user may or may not be allowed to wait when the parking lot is full.

Hence, the present invention can be applied to guiding the vehicle to an available place which accepts returned vehicles as appropriate for the current circumstances, thereby enhancing convenience.

In the fourth exemplary embodiment, a parking lot which accepts a returned vehicle and which allows the vehicle to wait when it is full corresponds to the first location. A parking lot which accepts a returned vehicle and which does not allow the vehicle to wait when it is full corresponds to the second location. The state information obtaining unit obtains, as state information, the degree of congestion of the parking lot accepting returned vehicles, time intervals between vehicle arrivals at the parking lot, time intervals between vehicle departures from the parking lot, and history of car sharing reservations. The route setting unit estimates a moving time to each site and a waiting time there on the basis of the obtained state information to set a suitable moving route.

Employing such configuration and operations makes it possible to guide the vehicle to an available site accepting returned vehicles as appropriate for the current circumstances, thereby enhancing convenience.

As indicated in the individual exemplary embodiments, a program may be recorded into a computer-readable recording medium, and then the program recorded in the recording medium may be loaded into, and executed on, a computer system to carry out the processes handled by the individual units. The aforementioned program is for implementing all or part of the functions of the navigation device and navigation system according to the present invention. The term "computer system" as used herein includes an operating system (OS) and hardware such as peripheral devices.

The term "computer-readable recording medium" refers to a portable medium such as a magneto-optical disk, read only memory (ROM), or non-volatile semiconductor memory, or a storage device such as a hard disk built into the computer system.

The term "computer-readable recording medium" further includes a medium which dynamically retains a program for a short time, such as a communication wire which transmits a program via a network like the Internet or via a communication line like a telephone line. The term "computer-readable recording medium" further includes a medium which retains a program for a certain time, such as volatile memory located inside a computer system which acts as a server or a client, in the case where a program is transmitted via a network like the Internet or via a communication line like a telephone line.

The above-mentioned program may be a program implementing part of the above-described functions, or may be a program implementing the above-described functions in combination with another program that is already recorded in the computer system.

The whole or part of the above-described first to fourth exemplary embodiments can be described as, but is not limited to, the following supplementary notes.

[Supplementary note 1]

A navigation device including:

a current position obtaining unit that obtains the current position of a vehicle;
a first location candidate obtaining unit that obtains a first location, which is a candidate location for a site where a predetermined service can be received and where the vehicle is allowed to wait when the predetermined service is not provided immediately upon arrival at the site;
a second location candidate obtaining unit that obtains a second location, which is a candidate location for a site where the predetermined service can be received and where the vehicle is not allowed to wait when the predetermined service is not provided immediately upon arrival at the site;
a state information obtaining unit that obtains, as state information, first location state information, which is information regarding the state of provision of the predetermined service at the first location obtained by the first location candidate obtaining unit, and second location state information, which is information regarding the state of provision of the predetermined service at the second location obtained by the second location candidate obtaining unit; and
a route setting unit that sets a moving route for the vehicle on the basis of the state information obtained by the state information obtaining unit.

[Supplementary note 2]

The navigation device according to supplementary note 1, further including:

a third location candidate obtaining unit that obtains a third location, which is a candidate location for a site where the predetermined service can be provided and where the vehicle is allowed to wait when the predetermined service is not provided immediately upon arrival at the site and the number of waiting vehicles, which is the number of vehicles that are waiting, is less than the number of waiting-allowed vehicles, which is a maximum number of vehicles that are allowed to wait; and

a third location candidate classifying unit that classifies the third location as either the first location or the second location, on the basis of information regarding the number of waiting vehicles, which is information regarding the number of vehicles waiting at the third location, and information regarding the number of waiting-allowed vehicles, which is information regarding the number of vehicles that are allowed to wait at the third location, wherein the state information obtaining unit obtains, as the state information, in addition to the first location state information and the second location state information, the third location state information regarding the state of provision of the predetermined service at the third location obtained by the third location candidate obtaining unit 111, the information including at least the information regarding the number of waiting vehicles and the information regarding the number of waiting-allowed vehicles, and wherein, on the basis of a classification result provided by the third location candidate classifying unit, the route setting unit sets a moving route for the vehicle by regarding the third location as either the first location or the second location.

[Supplementary note 3]

The navigation device according to supplementary note 1 or 2,
wherein the current position obtaining unit obtains the current position of the vehicle periodically,
wherein the state information obtaining unit obtains the state information periodically,
and wherein the route setting unit periodically sets a moving route for the vehicle on the basis of the state information that is periodically obtained by the state information obtaining unit.

[Supplementary note 4]

The navigation device according to any one of supplementary notes 1 to 3,
wherein the route setting unit determines whether it is suitable to guide the vehicle to move to a first specific location, which is one specific location among a plurality of the first locations,
and wherein, when determining that it is suitable to guide the vehicle to move to the first specific location, the route setting unit sets a route to the first specific location.

[Supplementary note 5]

The navigation device according to supplementary note 4, wherein, when the route setting unit makes a determination that it is not suitable to guide the vehicle to move to the first specific location while setting a route to the first specific location, the route setting unit sets a route for the vehicle on the basis of the current position of the vehicle and the state information as of the time of the determination.

[Supplementary note 6]

The navigation device according to supplementary note 4 or 5, wherein, when the route setting unit makes a determination that it is suitable to guide the vehicle to move to a second specific location, which is different from the first specific location and is one of a plurality of the first locations, while setting a route to the first specific location, the route setting unit sets a route to the second specific location on the basis of the current position of the vehicle and the state information as of the time of the determination.

[Supplementary note 7]

The navigation device according to any one of supplementary notes 1 to 6,
wherein the vehicle is a taxi vehicle and the predetermined service is a service for the taxi vehicle,
wherein the first location is a candidate location for a site of a taxi stand where the taxi vehicle can receive a service to pick up a passenger and where the taxi vehicle is allowed to wait when the service to pick up a passenger is not provided immediately upon arrival at the site,
and wherein the second location is a candidate location for a site of a cruising-allowed on-street taxi stand where the taxi vehicle can receive a service to pick up a passenger and where the taxi vehicle is not allowed to wait when the service to pick up a passenger is not provided immediately upon arrival at the site.

[Supplementary note 8]

The navigation device according any one of supplementary notes 1 to 6,
wherein the predetermined service is a vehicle parking service,
wherein the first location is a candidate location for a site of a parking lot where the vehicle parking service can be received and where the vehicle is allowed to wait when the vehicle parking service is not provided immediately upon arrival at the site,
and wherein the second location is a candidate location for a site of an on-street parking lot where the vehicle parking service can be received and where the vehicle is not allowed to wait when the vehicle parking service is not provided immediately upon arrival at the site.

[Supplementary note 9]

The navigation device according to supplementary note 8, including:

a taxi dynamics information collecting unit that collects taxi positional information indicating a position of the taxi vehicle and taxi dynamics information regarding dynamics of the taxi vehicle, and associates the taxi positional information and the taxi dynamics information with taxi identification information for identifying the taxi vehicle and with time information; and
an analyzing unit that generates the state information on the basis of information obtained by the taxi dynamics information collecting unit.

[Supplementary note 10]

A navigation method including:

a current position obtaining process of obtaining the current position of a vehicle;
a first location candidate obtaining process of obtaining a first location, which is a candidate location for a site where a predetermined service can be received and where the vehicle is allowed to wait when the predetermined service is not provided immediately upon arrival at the site;
a second location candidate obtaining process of obtaining a second location, which is a candidate location for a site where the predetermined service can be received and where the vehicle is not allowed to wait when the predetermined service is not provided immediately upon arrival at the site;
a state information obtaining process of obtaining, as state information, first location state information, which is information regarding the state of provision of the predetermined service at the first location obtained by the first location candidate obtaining process, and second location state information, which is information regarding the state of provision of the predetermined service at the second location obtained by the second location candidate obtaining process; and
a route setting process of setting a moving route for the vehicle on the basis of the state information obtained by the state information obtaining process.

[Supplementary note 11]

A navigation program causing a computer to execute:

a current position obtaining process of obtaining the current position of a vehicle;
a first location candidate obtaining process of obtaining a first location, which is a candidate location for a site where a predetermined service can be received and where the vehicle is allowed to wait when the predetermined service is not provided immediately upon arrival at the site;
a second location candidate obtaining process of obtaining a second location, which is a candidate location for a site where the predetermined service can be received and where the vehicle is not allowed to wait when the predetermined service is not provided immediately upon arrival at the site;
a state information obtaining process of obtaining, as state information, first location state information, which is information regarding the state of provision of the predetermined service at the first location obtained by the first location candidate obtaining process, and second location state information, which is information regarding the state of provision of the predetermined service at the second location obtained by the second location candidate obtaining process; and
a route setting process of setting a moving route for the vehicle on the basis of the state information obtained by the state information obtaining process.

As above, the present invention has been described based on the exemplary embodiments. An exemplary embodiment is just an illustration, and various kinds of changes, addition or subtraction and combinations may be added to each of the above-mentioned exemplary embodiments unless it deviates from the main points of the present invention. It is understood by a person skilled in the art that modification made by adding such changes, addition/subtraction and combinations are also included in the scope of the present invention.

The present application claims priority based on Japanese Patent Application No. 2014-233540 filed on November 18, 2014, the entire disclosure of which is incorporated herein.

[Reference signs List]

| | |
|---|---|
| 1 | Vehicle |
| 11 | Taxi vehicle |
| 2, 2a to 2d | Parking lot |
| 3, 3a, 3b | On-street parking lot |
| 4, 4a to 4f | Street |
| 5, 5a, | 5b Waiting-allowed parking lot |
| 12, 12a to 12c | Taxi stand |
| 13, 13a to 13d | Cruising-allowed on-street taxi stand |
| 14, 14a to 14f | Street |
| 100, 100A, 100B | Navigation device |
| 101 | Current position obtaining unit |
| 102 | First location candidate obtaining unit |
| 103 | Second location candidate obtaining unit |
| 104, 104A | State information obtaining unit |
| 105, 105A | Route setting unit |
| 106 | Storage unit |
| 107 | Presenting unit |
| 111 | Third location candidate obtaining unit |
| 112 | Third location candidate classifying unit |
| 122 | Taxi dynamics information transmitting unit |
| 131 | Taxi dynamics information collecting unit |
| 132 | Analyzing unit |
| 133 | State information transmitting unit |
| 134 | Storage unit |
| 200B | Taxi dynamics management server |
| 1000B | Navigation system |

**Claims**

1. A navigation device comprising:

current position obtaining means that obtains the current position of a vehicle;
first location candidate obtaining means that obtains a first location, which is a candidate location for a site where a predetermined service can be received and where the vehicle is allowed to wait when the predetermined service is not provided immediately upon arrival at the site;
second location candidate obtaining means that obtains a second location, which is a candidate location for a site where the predetermined service can be received and where the vehicle is not allowed to wait when the predetermined service is not provided immediately upon arrival at the site;
state information obtaining means that obtains, as state information, first location state information, which is information regarding the state of provision of the predetermined service at the first location obtained by the first location candidate obtaining means, and second location state information, which is information regarding the state of provision of the predetermined service at the second location obtained by the second location candidate obtaining means; and

route setting means that sets a moving route for the vehicle on the basis of the state information obtained by the state information obtaining means.

2. The navigation device according to claim 1, further comprising:

third location candidate obtaining means that obtains a third location, which is a candidate location for a site where the predetermined service can be provided and where the vehicle is allowed to wait when the predetermined service is not provided immediately upon arrival at the site and the number of waiting vehicles, which is the number of vehicles that are waiting, is less than the number of waiting-allowed vehicles, which is a maximum number of vehicles that are allowed to wait; and

third location candidate classifying means that classifies the third location as either the first location or the second location, on the basis of information regarding the number of waiting vehicles, which is information regarding the number of vehicles waiting at the third location, and information regarding the number of waiting-allowed vehicles, which is information regarding the number of vehicles that are allowed to wait at the third location,

wherein the state information obtaining means obtains, as the state information, in addition to the first location state information and the second location state information, the third location state information regarding the state of provision of the predetermined service at the third location obtained by the third location candidate obtaining means, the information including at least the information regarding the number of waiting vehicles and the information regarding the number of waiting-allowed vehicles,

and wherein, on the basis of a classification result provided by the third location candidate classifying means, the route setting means sets a moving route for the vehicle by regarding the third location as either the first location or the second location.

3. The navigation device according to claim 1 or 2,
wherein the current position obtaining means obtains the current position of the vehicle periodically,
wherein the state information obtaining means obtains the state information periodically,
and wherein the route setting means periodically sets a moving route for the vehicle on the basis of the state information that is periodically obtained by the state information obtaining means.

4. The navigation device according to any one of claims 1 to 3,
wherein the route setting means determines whether it is suitable to guide the vehicle to move to a first specific location, which is one specific location among a plurality of the first locations,
and wherein, when determining that it is suitable to guide the vehicle to move to the first specific location, the route setting means sets a route to the first specific location.

5. The navigation device according to claim 4, wherein, when the route setting means makes a determination that it is not suitable to guide the vehicle to move to the first specific location while setting a route to the first specific location, the route setting means sets a route for the vehicle on the basis of the current position of the vehicle and the state information as of the time of the determination.

6. The navigation device according to claim 4 or 5, wherein, when the route setting means makes a determination that it is suitable to guide the vehicle to move to a second specific location, which is different from the first specific location and is one of a plurality of the first locations, while setting a route to the first specific location, the route setting means sets a route to the second specific location on the basis of the current position of the vehicle and the state information as of the time of the determination.

7. The navigation device according to any one of claims 1 to 6,
wherein the vehicle is a taxi vehicle and the predetermined service is a service for the taxi vehicle,
wherein the first location is a candidate location for a site of a taxi stand where the taxi vehicle can receive a service to pick up a passenger and where the taxi vehicle is allowed to wait when the service to pick up a passenger is not provided immediately upon arrival at the site,
and wherein the second location is a candidate location for a site of a cruising-allowed on-street taxi stand where the taxi vehicle can receive a service to pick up a passenger and where the taxi vehicle is not allowed to wait when the service to pick up a passenger is not provided immediately upon arrival at the site.

8. The navigation device according to any one of claims 1 to 6,
wherein the predetermined service is a vehicle parking service,

wherein the first location is a candidate location for a site of a parking lot where the vehicle parking service can be received and where the vehicle is allowed to wait when the vehicle parking service is not provided immediately upon arrival at the site,
and wherein the second location is a candidate location for a site of an on-street parking lot where the vehicle parking service can be received and where the vehicle is not allowed to wait when the vehicle parking service is not provided immediately upon arrival at the site.

9. A navigation method comprising:

obtaining a first location, which is a candidate location for a site where a predetermined service can be received and where the vehicle is allowed to wait when the predetermined service is not provided immediately upon arrival at the site, and a second location, which is a candidate location for a site where the predetermined service can be received and where the vehicle is not allowed to wait when the predetermined service is not provided immediately upon arrival at the site;
obtaining, as state information, first location state information, which is information regarding the state of provision of the predetermined service at the first location, and second location state information, which is information regarding the state of provision of the predetermined service at the second location; and
setting a moving route for the vehicle on the basis of the state information.

10. A storage medium storing a program that causes a computer to execute the processes of:

obtaining a first location, which is a candidate location for a site where a predetermined service can be received and where the vehicle is allowed to wait when the predetermined service is not provided immediately upon arrival at the site, and a second location, which is a candidate location for a site where the predetermined service can be received and where the vehicle is not allowed to wait when the predetermined service is not provided immediately upon arrival at the site;
obtaining, as state information, first location state information, which is information regarding the state of provision of the predetermined service at the first location, and second location state information, which is information regarding the state of provision of the predetermined service at the second location obtained by the second location candidate obtaining process; and
setting a moving route for the vehicle on the basis of the state information.

Fig. 1

EP 3 222 974 A1

Fig. 2

EP 3 222 974 A1

## Fig. 3

Fig. 4

| PARKING LOT | DISTANCE | DEGREE OF CONGESTION | TIME INTERVAL BETWEEN USER ARRIVALS | TIME INTERVAL BETWEEN USER DEPARTURES | NEARBY STREET |
|---|---|---|---|---|---|
| 2a | 200m | FULL | 50 SECONDS | 120 SECONDS | CROWDED |
| 2b | 800m | FULL | 100 SECONDS | 40 SECONDS | CROWDED |
| 2c | 500m | FULL | 50 SECONDS | 50 SECONDS | – |
| 2d | 500m | FULL | 140 SECONDS | 150 SECONDS | – |
| 3a | 600m | FULL | – | 200 SECONDS | – |
| 3b | 500m | FULL | – | 100 SECONDS | – |

EP 3 222 974 A1

Fig. 5

EP 3 222 974 A1

## Fig. 6

| PARKING LOT | DISTANCE | DEGREE OF CONGESTION | TIME INTERVAL BETWEEN USER ARRIVALS | TIME INTERVAL BETWEEN USER DEPARTURES | NEARBY STREET |
|---|---|---|---|---|---|
| 2a | 500m | FULL | 70 SECONDS | 100 SECONDS | CROWDED |
| 2b | 300m | AVAILABLE | 80 SECONDS | 30 SECONDS | – |
| 2c | 0m | FULL | 50 SECONDS | 50 SECONDS | – |
| 2d | 1100m | FULL | 140 SECONDS | 150 SECONDS | – |
| 3a | 200m | FULL | – | 250 SECONDS | – |
| 3b | 0m | FULL | – | 150 SECONDS | – |

Fig. 7

EP 3 222 974 A1

Fig. 8

EP 3 222 974 A1

Fig. 9

Fig. 10

```
                        ┌─────────────────────┐
                        │    START SEARCH     │
                        └─────────────────────┘
                                  │
                                  ▼
                   ┌─────────────────────────┐   S11
                   │    OBTAIN CURRENT       │
                   │       POSITION          │
                   └─────────────────────────┘
                                  │
          ┌───────────────────────┼───────────────────────┐
          ▼                       ▼                       ▼
  S12 ┌──────────────┐    S13 ┌──────────────┐    S21 ┌──────────────┐
      │OBTAIN FIRST  │        │OBTAIN SECOND │        │OBTAIN THIRD  │
      │LOCATION      │        │LOCATION      │        │LOCATION      │
      │CANDIDATE     │        │CANDIDATE     │        │CANDIDATE     │
      │BASED ON      │        │BASED ON THE  │        │BASED ON      │
      │THE CURRENT   │        │CURRENT       │        │THE CURRENT   │
      │POSITION      │        │POSITION      │        │POSITION      │
      └──────────────┘        └──────────────┘        └──────────────┘
          └───────────────────────┼───────────────────────┘
                                  ▼
```

OBTAIN STATE INFORMATION REGARDING THE OBTAINED FIRST, SECOND, AND THIRD LOCATION CANDIDATES — S14A

CLASSIFY EACH OF THIRD LOCATIONS AS EITHER FIRST LOCATION OR SECOND LOCATION BASED ON INFORMATION REGARDING THE NUMBER OF WAITING VEHICLES AND THE NUMBER OF WAITING-ALLOWED VEHICLES — S22

SET MOVING ROUTE FOR VEHICLE 1 BASED ON STATE INFORMATION REGARDING FIRST AND SECOND LOCATION CANDIDATES — S15

OUTPUT MOVING ROUTE FOR VEHICLE 1 TO PRESENTING UNIT — S16

END

EP 3 222 974 A1

## Fig. 11

| PARKING LOT | DISTANCE | DEGREE OF CONGESTION | TIME INTERVAL BETWEEN USER ARRIVALS | TIME INTERVAL BETWEEN USER DEPARTURES | NEARBY STREET | WAITING VEHICLES/ WAITING-ALLOWED VEHICLES | DETERMINATION RESULT |
|---|---|---|---|---|---|---|---|
| 2a | 200m | FULL | 50 SECONDS | 120 SECONDS | CROWDED | - | 1 |
| 2b | 800m | FULL | 100 SECONDS | 40 SECONDS | CROWDED | - | 1 |
| 5a | 500m | FULL | 50 SECONDS | 50 SECONDS | - | 6/6 VEHICLES | 2 |
| 5b | 500m | FULL | 140 SECONDS | 150 SECONDS | - | 3/5 VEHICLES | 1 |
| 3a | 600m | FULL | - | 200 SECONDS | - | - | 2 |
| 3b | 500m | FULL | - | 100 SECONDS | - | - | 2 |

EP 3 222 974 A1

## Fig. 12

**1000B**

**200B**

**TAXI DYNAMICS MANAGEMENT SERVER**

134 — STORAGE UNIT

131 — TAXI DYNAMICS INFORMATION COLLECTING UNIT

ANALYZING UNIT — 132

133 — STATE INFORMATION TRANSMITTING UNIT

**100B**

**NAVIGATION DEVICE**

122 — TAXI DYNAMICS INFORMATION TRANSMITTING UNIT

101 — CURRENT POSITION OBTAINING UNIT

102 — FIRST LOCATION CANDIDATE OBTAINING UNIT

103 — SECOND LOCATION CANDIDATE OBTAINING UNIT

104 — STATE INFORMATION OBTAINING UNIT

121 — TAXI DYNAMICS INFORMATION OBTAINING UNIT

105 — ROUTE SETTING UNIT

106 — STORAGE UNIT

107 — PRESENTING UNIT

EP 3 222 974 A1

Fig. 13

EP 3 222 974 A1

## Fig. 14

| SERVICE SITE | TYPE | DISTANCE | WAITING VEHICLES | TIME INTERVALS BETWEEN EMPTY TAXI ARRIVALS/PASSAGES | TIME INTERVAL BETWEEN PASSENGER RIDINGS | NEARBY STREET |
|---|---|---|---|---|---|---|
| 12a | STAND | 500m | 3 VEHICLES | 220 SECONDS | 200 SECONDS | – |
| 12b | STAND | 1000m | 1 VEHICLE | 300 SECONDS | 420 SECONDS | – |
| 12c | STAND | 700m | 2 VEHICLES | 180 SECONDS | 220 SECONDS | – |
| 13a | CRUISING | 500m | – | 20 SECONDS | 210 SECONDS | CROWDED |
| 13b | CRUISING | 200m | – | 15 SECONDS | 200 SECONDS | – |
| 13c | CRUISING | 500m | – | 30 SECONDS | 150 SECONDS | – |
| 13d | CRUISING | 200m | – | 20 SECONDS | 140 SECONDS | CROWDED |

## INTERNATIONAL SEARCH REPORT

| International application No. |
| --- |
| PCT/JP2015/005676 |

**A. CLASSIFICATION OF SUBJECT MATTER**
*G01C21/34*(2006.01)i, *G08G1/00*(2006.01)i, *G08G1/0968*(2006.01)i, *G08G1/14* (2006.01)i

According to International Patent Classification (IPC) or to both national classification and IPC

**B. FIELDS SEARCHED**

Minimum documentation searched (classification system followed by classification symbols)
G01C21/00-21/36, G01C23/00-25/00, G08G1/00-99/00

Documentation searched other than minimum documentation to the extent that such documents are included in the fields searched
Jitsuyo Shinan Koho                1922-1996      Jitsuyo Shinan Toroku Koho      1996-2016
Kokai Jitsuyo Shinan Koho      1971-2016      Toroku Jitsuyo Shinan Koho      1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2006/109555 A1  (Pioneer Corp.),<br>19 October 2006 (19.10.2006),<br>claims 1 to 22; paragraphs [0014] to [0108];<br>fig. 1 to 7<br>(Family: none) | 1,9-10<br>2-8 |
| Y | JP 2009-2784 A  (Aisin AW Co., Ltd.),<br>08 January 2009 (08.01.2009),<br>paragraphs [0037] to [0052]<br>(Family: none) | 2-8 |
| Y | JP 2014-130552 A  (ZMP Inc.),<br>10 July 2014 (10.07.2014),<br>paragraph [0036]<br>(Family: none) | 7-8 |

☒  Further documents are listed in the continuation of Box C.          ☐  See patent family annex.

| *    Special categories of cited documents: | "T"  later document published after the international filing date or priority date and not in conflict with the application but cited to understand the principle or theory underlying the invention |
| --- | --- |
| "A"  document defining the general state of the art which is not considered    to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search<br>    04 February 2016 (04.02.16) | Date of mailing of the international search report<br>    16 February 2016 (16.02.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

## INTERNATIONAL SEARCH REPORT

| | International application No. |
|---|---|
| | PCT/JP2015/005676 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-3026 A (Pioneer Corp.), 06 January 2011 (06.01.2011), claims 1 to 12; paragraphs [0014] to [0086]; fig. 1 to 7 (Family: none) | 1-10 |
| P,A | JP 2015-190932 A (Aisin AW Co., Ltd.), 02 November 2015 (02.11.2015), claims 1 to 7; paragraphs [0011] to [0105]; fig. 1 to 12 (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007263581 A
- JP 2009174864 A
- JP 2014500697 W
- WO 2014030233 A
- JP 2014233540 A